# EUROPEAN PATENT APPLICATION

(11) **EP 2 838 009 A2**
(43) Date of publication of application: **18.02.2015**
(21) Application number: 14180479.9
(22) Date of filing: 11.08.2014
(51) Int. Cl.: G06F 3/0488, G06F 3/041

(54) **Terminal and method for controlling the same**

(30) Priority: 12.08.2013 KR 20130095646
(71) Applicant: LG Electronics, Inc., Seoul 150-721 (KR)
(72) Inventor: Park, Jongseok, 137-893 Seoul (KR)
(74) Representative: Cabinet Plasseraud

(57) **Abstract**

The present disclosure provides a mobile terminal including a display unit configured to display screen information and receive a user's touch input generating a first control command for changing the screen information, a bezel portion formed to surround an edge of the display unit to support the display unit and provided with a touch sensor receiving a user's touch input, and a controller configured to generate a second control command for changing the screen information by a user's consecutive touch input moving along at least one region of the bezel portion, wherein the controller controls the display unit to change the screen information based on at least one of the first and the second control command distinguished from each other.

## Description

### BACKGROUND OF THE INVENTION

### 1. Field of the invention

The present disclosure relates to a mobile terminal for allowing at least part of a front surface of the mobile terminal to sense a user's touch input.

### 2. Description of the related art

Terminals can be classified into two types, such as a mobile or portable terminal and a stationary terminal based on its mobility. Furthermore, the mobile terminal can be further classified into two types, such as a handheld terminal and a vehicle mount terminal based on whether or not it can be directly carried by a user.

As the function becomes diversified, the terminal is implemented in the form of a multimedia player having complicated functions such as capturing still or moving images, playing music or video files, gaming, receiving broadcast, and the like. Moreover, improvements in the structural and software elements of the terminal may be taken into consideration to support and enhance the function of the terminal.

In recent years, in order to streamline an external appearance of the mobile terminal and minimize the weight of the terminal itself, various studies for expanding a display unit of the mobile terminal and minimizing the width of a case supporting the display unit have been carried out. However, a bezel portion configured to surround the display unit and formed with electrical wirings is a mechanically required configuration, and the width reduction of the bezel portion is currently reaching a critical point.

### SUMMARY OF THE INVENTION

Accordingly, the task of the present disclosure is to provide a mobile terminal capable of controlling functions by a specific touch input on a bezel portion that supports the display unit.

In order to accomplish the foregoing task of the present disclosure, a terminal according to an embodiment of the present disclosure may include a display unit configured to display screen information and receive a user's touch input generating a first control command for changing the screen information, a bezel portion formed to surround an edge of the display unit to support the display unit and provided with a touch sensor receiving a user's touch input, and a controller configured to generate a second control command for changing the screen information by a user's consecutive touch input moving along at least one region of the bezel portion, wherein the controller controls the display unit to change the screen information based on at least one of the first and the second control command distinguished from each other.

As an example associated with the present disclosure, the first and the second control command may control the same function of the mobile terminal, and the controller may control the function with a different method based on the first and the second control command by the same touch range applied to the display unit or the bezel portion.

As an example associated with the present disclosure, the first and the second control command may change a control value in proportion to a touch section of the consecutive touch input, and the changed amounts of the control value according to the first and the second control command may be different from each other.

As an example associated with the present disclosure, the control value may correspond to a volume of the output sound, a brightness of the display unit and a playback section of the reproduced video.

As an example associated with the present disclosure, the screen information may correspond to part of visual data, and the controller may control the display unit to display part of the screen information and part of the remaining visual data when the first control command is applied, and controller may control the display unit to display part of the remaining visual data excluding the screen information when the second control command is applied.

As an example associated with the present disclosure, the screen information may include a plurality of changeable content, and different content of the plurality of contents may be changed based on the first and the second control command.

As an example associated with the present disclosure, the controller may control the display unit to display an image in which the screen information is enlarged or reduced based on the first and the second control command, and a touch input for forming the first and the second control command may be applied in a different manner.

As an example associated with the present disclosure, the controller may control the display unit to display additional content along with part of the screen information based on the first and the second control command, and a touch input for generating the first control command may correspond to a touch applied to a graphic image contained in the screen information, and a touch input for generating the second control command may correspond to a consecutive touch applied to the bezel portion along a predetermined direction.

As an example associated with the present disclosure, different functions of the mobile terminal may be controlled based on the first and the second control command.

As an example associated with the present disclosure, the controller may change an active mode of the display unit based on the second control command.

As an example associated with the present disclosure, the controller may release a lock mode and execute a predetermined application based on the touch direction of a touch input applied to the bezel portion in the lock mode in which at least part of the touch input on the display unit is limited.

As an example associated with the present disclosure, the screen information may include a cursor formed in text and at least one region within the text, and the controller may control the display unit to move the location of the cursor or edit at least part of the text based on the second control command.

As an example associated with the present disclosure, the bezel portion may include a first bezel and a second bezel formed to surround two edges facing each other on the display unit, and the controller may control the display unit based on a touch input applied to at least one of the first and the second bezel.

As an example associated with the present disclosure, the controller controls the display unit to display at least one of the execution screens of applications being executed based on touch inputs applied to the first and the second bezel at the same time.

As an example associated with the present disclosure, the controller may change the output status of the screen information based on consecutive touch inputs applied to the first and the second bezel at the same time.

As an example associated with the present disclosure, the directions of a consecutive touch inputs applied to the first and the second bezel at the same time may be the same or correspond to opposite directions to each other.

As an example associated with the present disclosure, the mobile terminal may further include a sensor unit configured to sense the rotation of the mobile terminal body, wherein the controller changes the display direction of the screen information according to a layout direction of the rotation of the body, and the controller generates a control command controlling a different function based on a touch input applied to the first and the second bezel according to the layout direction.

As an example associated with the present disclosure, the controller may control a different function based on a touch input applied to the same bezel portion according to the layout direction of the mobile terminal body.

As an example associated with the present disclosure, the direction of a consecutive touch input for controlling the same function may be defined as a different direction.

As an example associated with the present disclosure, the controller may independently control a different function based on a touch input applied to the first and the second bezel.

As an example associated with the present disclosure, the mobile terminal may further include a front camera unit disposed on a front surface of the mobile terminal body to acquire an image and a rear camera unit disposed on a rear surface of the mobile terminal body to acquire an image, wherein the controller independently controls the front and the rear camera unit based on a touch input applied to the first and the second bezel in a state that the front and the rear camera unit are activated at the same time.

As an example associated with the present disclosure, the mobile terminal may further include an audio output unit configured to output sound, wherein the controller independently controls the audio output unit and the display unit based on a touch input applied to the first and the second bezel while reproducing video in which the sound and screen information are output at the same time.

As an example associated with the present disclosure, the bezel portion may include a first and a second region consecutively formed thereon, and the controller may control a different function based on a consecutive touch input applied to the first and the second region.

As an example associated with the present disclosure, the controller may control a function selected based on an initial touch region of the consecutive touch input.

As an example associated with the present disclosure, the controller may control the display unit to display a display area containing the information of the function in one region on the display unit adjacent to the initial touch region.

As an example associated with the present disclosure, the screen information may include an icon receiving a touch input for the execution screen of an application, wherein the controller may control the display unit to display specific screen information of the application based on a touch input consecutively applied from the bezel portion to the icon.

As an example associated with the present disclosure, the controller controls the display unit to change the screen information based on a touch input applied to a consecutive region of the bezel portion.

As an example associated with the present disclosure, the bezel portion may further include a light-emitting portion formed to allow at least one region of the bezel portion to emit light when a touch input is applied to the bezel portion.

As an example associated with the present disclosure, the mobile terminal may further include a terminal body including a front surface formed with the display unit, a rear surface facing the front surface and a lateral surface connecting the front surface to the rear surface, and a touch sensing unit including a first and a second sensing unit disposed to correspond to the display unit and the bezel portion within the terminal body formed to sense a user's touch input.

As an example associated with the present disclosure, the first and the second sensing unit of the touch sensing unit may be formed with independent sensing members.

As an example associated with the present disclosure, the mobile terminal may further include at least one manipulation unit disposed at the bezel portion of the body to receive a user's touch input so as to generate a predetermined control command, wherein a sensing region constituting the touch sensing unit is formed between at least one manipulation unit.

As an example associated with the present disclosure, the mobile terminal may further include a circuit board configured to generate an electrical signal, and a wiring unit extended from the touch sensing unit and formed to transfer a signal based on a user's touch input to the circuit board, wherein at least part of the wiring unit and the touch sensing unit is disposed to face the lateral surface.

According to the present disclosure, it may be possible to control the same function due to a touch input applied to the display unit based on a consecutive touch input applied to the bezel portion with a different method. Accordingly, the user may control the adjustment range of a function by a touch input to a different region.

Furthermore, a difficult function to be controlled by the display unit or manipulation unit may be carried out by a touch input applied to the bezel portion, thereby controlling the mobile terminal in a more fast and convenient manner.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal according to an embodiment disclosed in the present disclosure;
FIGS. 2A and 2B are conceptual views illustrating a communication system in which a terminal according to the present disclosure is operable;
FIG. 3A is a front perspective view illustrating an example of a mobile terminal associated with the present disclosure;
FIG. 3B is a rear perspective view illustrating a mobile terminal illustrated in FIG. 3A;
FIG. 3C is a front perspective view illustrating another example of a mobile terminal associated with the present disclosure;
FIG. 4 is a view illustrating the configuration of a mobile terminal having a touch sensing unit as an exploded perspective view of the mobile terminal in FIG. 2;
FIGS. 5A through 5C are partial cross-sectional views cut along line A-A in FIG. 4;
FIGS. 6A through 6F are conceptual views for explaining the structure of a touch sensing unit according to various embodiments;
FIG. 7 is a flow chart for explaining a control method of a mobile terminal according to an embodiment of the present disclosure;
FIGS. 8A through 8D are conceptual views for explaining a control method of FIG. 7 according to each embodiment;
FIGS. 9A through 9J are conceptual views for explaining a method of controlling each function of the mobile terminal by a consecutive touch input applied to the bezel portion according to various embodiments;
FIGS. 10A through 10E are conceptual views for explaining a control method of a mobile terminal based on a consecutive touch input applied both bezel portions;
FIGS. 11A through 11D are conceptual views for explaining a control method of different functions according to a touch input method applied to the bezel portion;
FIG. 12 is a conceptual view for explaining a control method based on a consecutive touch input applied to the display unit and the bezel portion;
FIGS. 13A through 13D are conceptual views for explaining a control method of displaying a function controlled based on a touch input applied to the bezel portion;
FIG. 14 is a conceptual view for explaining a control method in case where a case is mounted on the mobile terminal; and
FIG. 15 is a conceptual view for explaining a control method of a mobile terminal containing a manipulation unit.

### DETAILED DESCRIPTION OF THE INVENTION

Hereinafter, preferred embodiments of the present invention will be described in detail with reference to the accompanying drawings, and the same or similar elements are designated with the same numeral references regardless of the numerals in the drawings and their redundant description will be omitted. A suffix "module" or "unit" used for constituent elements disclosed in the following description is merely intended for easy description of the specification, and the suffix itself does not give any special meaning or function. In describing the present invention, moreover, the detailed description will be omitted when a specific description for publicly known technologies to which the invention pertains is judged to obscure the gist of the present invention. Also, it should be noted that the accompanying drawings are merely illustrated to easily explain the concept of the invention, and therefore, they should not be construed to limit the technological concept disclosed herein by the accompanying drawings.

A terminal disclosed herein may include a portable phone, a smart phone, a laptop computer, a digital broadcast terminal, a personal digital assistant (PDA), a mobile multimedia player (PMP), a navigation, a slate PC, a tablet PC, an ultrabook, and the like. However, it would be easily understood by those skilled in the art that a configuration according to the following description may be applicable to a stationary terminal such as a digital TV, a desktop computer, and the like, excluding constituent elements particularly configured for mobile purposes.

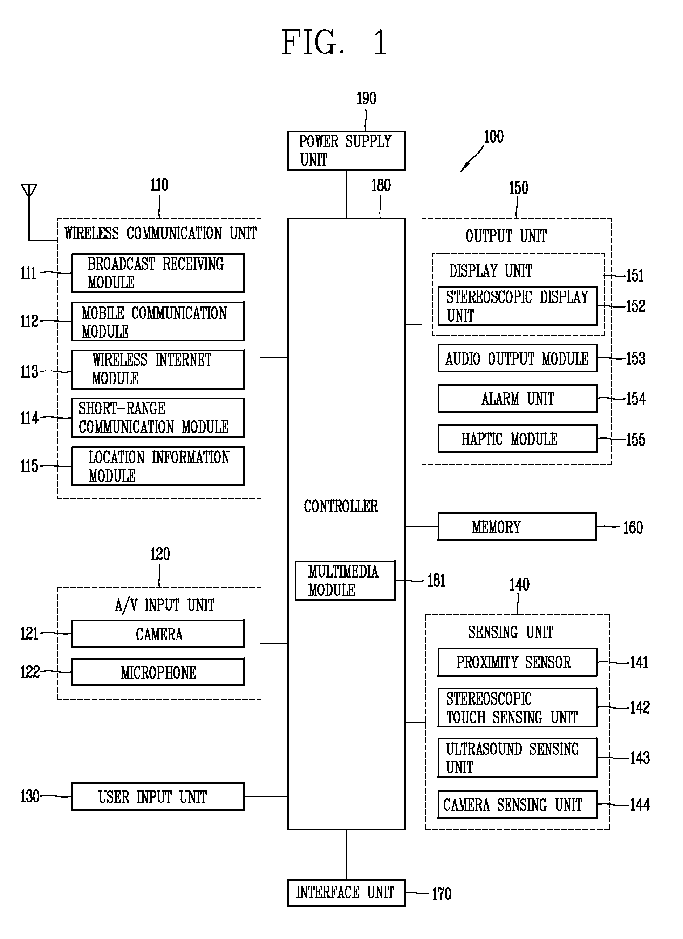

FIG. 1 is a block diagram illustrating a mobile terminal 100 according to an embodiment disclosed in the present disclosure.

The mobile terminal 100 may include a wireless communication unit 110, an audio/video (AN) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile communication terminal may be implemented with greater or less number of elements than those illustrated elements.

Hereinafter, the foregoing constituent elements will be described in sequence.

The wireless communication unit 110 may include one or more modules allowing radio communication between the mobile terminal 100 and a wireless communication system, or allowing radio communication between the mobile terminal 100 and a network in which the mobile terminal 100 is located. For example, the wireless communication unit 110 may include at least one of a broadcast receiving module 111, a mobile communication module 112, a wireless Internet module 113, a short-range communication module 114, a location information module 115, and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. Of course, the broadcast receiving module 111 may be configured to be suitable for every broadcast system transmitting broadcast signals as well as the digital broadcasting systems.

Broadcast signals and/or broadcast associated information received via the broadcast receiving module 111 may be stored in a memory 160.

The mobile communication module 112 transmits and receives wireless signals to and from at least one a base station, an external terminal and a server on a mobile communication network. Here, the wireless signals may include audio call signals, video call signals, or various formats of data according to the transmission and reception of text/multimedia messages.

The mobile communication module 112 may be configured to implement an video communication mode and a voice communication mode. The video communication mode refers to a configuration in which communication is made while viewing the image of the counterpart, and the voice communication mode refers to a configuration in which communication is made without viewing the image of the counterpart. The mobile communication module 112 may be configured to transmit or receive at least one of audio or video data to implement the video communication mode and voice communication mode.

The wireless Internet module 113 refers to a module for supporting wireless Internet access, and may be built-in or externally installed on the mobile terminal 100. Here, it may be used a wireless Internet access technique including WLAN (Wireless LAN), Wi-Fi (Wireless Fidelity) Direct, DLNA (Digital Living Network Alliance), Wibro (Wireless Broadband), Wimax (World Interoperability for Microwave Access), HSDPA (High Speed Downlink Packet Access), and the like.

The short-range communication module 114 refers to a module for supporting a short-range communication. Here, it may be used a short-range communication technology including Bluetooth™, Radio Frequency IDentification (RFID), Infrared Data Association (IrDA), Ultra WideBand (UWB), ZigBee, Near Field Communication (NFC) and the like.

The location information module 115 is a module for checking or acquiring the location of the terminal, and there is a Global Positioning Module (GPS) module or Wireless Fidelity (WiFI) as a representative example.

Referring to FIG. 1, the A/V(audio/video) input unit 120 receives an audio or video signal, and the AN (audio/video) input unit 120 may include a camera 121 and a microphone 122. The camera 121 processes image frames, such as still or moving images, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Furthermore, the user's location information or the like may be produced from image frames acquired from the camera 121. Two or more cameras 121 may be provided according to the use environment.

The microphone 122 receives an external audio signal through a microphone in a phone call mode, a recording mode, a voice recognition mode, and the like, and processes the audio signal into electrical voice data. The processed voice data may be converted and output into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an opened or closed configuration of the mobile terminal 100, a location of the mobile terminal 100, a presence or absence of user contact with the mobile terminal 100, an orientation of the mobile terminal 100, an acceleration/deceleration of the mobile terminal 100, and the like, so as to generate a sensing signal for controlling the operation of the mobile terminal 100. For example, when the mobile terminal 100 is a slide phone type, the sensing unit 140 may sense whether a sliding portion of the terminal is open or closed. Other examples include sensing functions, such as the sensing unit 140 sensing the presence or absence of power provided by the power supply unit 190, the presence or absence of a coupling between the interface unit 170 and an external device.

The output unit 150 is configured to generate an output associated with visual sense, auditory sense or tactile sense, and may include a display unit 151, an audio output module 153, an alarm unit 154, a haptic module 155, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a terminal body through a region occupied by the display unit 151 of the terminal body.

Two or more display units 151 may be implemented according to a configured aspect of the mobile terminal 100. For instance, a plurality of the display units 151 may be arranged on one surface to be spaced apart from or integrated with each other, or may be arranged on different surfaces.

Furthermore, the display unit 151 may be configured with a stereoscopic display unit 152 for displaying a stereoscopic image.

Here, stereoscopic image indicates a 3-dimensional stereoscopic image, and the 3-dimensional stereoscopic image is an image for allowing the user to feel the gradual depth and reality of an object located on the monitor or screen as in a real space. The 3-dimensional stereoscopic image may be implemented by using binocular disparity. Here, binocular disparity denotes a disparity made by the location of two eyes separated from each other, allowing the user to feel the depth and reality of a stereoscopic image when two eyes see different two-dimensional images and then the images are transferred through the retina and merged in the brain as a single image.

A stereoscopic method (glasses method), an auto-stereoscopic method (no-glasses method), a projection method (holographic method), and the like may be applicable to the stereoscopic display unit 152. The stereoscopic method primarily used in a home television receiver and the like may include a Wheatstone stereoscopic method and the like.

The examples of the auto-stereoscopic method may include a parallel barrier method, a lenticular method, an integral imaging method, and the like. The projection method may include a reflective holographic method, a transmissive holographic method, and the like.

In general, a 3-dimensional stereoscopic image may include a left image (image for the left eye) and a right image (image for the right eye). The method of implementing a 3-dimensional stereoscopic image can be divided into a top-down method in which a left image and a right image are disposed at the top and bottom within a frame, a left-to-right (L-to-R) or side by side method in which a left image and a right image are disposed at the left and right within a frame, a checker board method in which the pieces of a left image and a right image are disposed in a tile format, an interlaced method in which a left and a right image are alternately disposed for each column and row unit, and a time sequential or frame by frame method in which a left image and a right image are alternately displayed for each time frame, according to the method of combining a left image and a right image into a 3-dimensional stereoscopic image.

For 3-dimensional thumbnail images, a left image thumbnail and a right image thumbnail may be generated from the left and the right image of the original image frame, and then combined with each other to generate a 3-dimensional stereoscopic image. Typically, thumbnail denotes a reduced image or reduced still video. The left and right thumbnail image generated in this manner are displayed with a left and right distance difference on the screen in a depth corresponding to the disparity of the left and right image, thereby implementing a stereoscopic space feeling.

A left image and a right image required to implement a 3-dimensional stereoscopic image are displayed on the stereoscopic display unit 152 by a stereoscopic processing unit (not shown). The stereoscopic processing unit receives a 3D image to extract a left image and a right image from the 3D image, or receives a 2D image to convert it into a left image and a right image.

On the other hand, when the display unit 151 and a touch sensitive sensor (hereinafter, referred to as a "touch sensor") have an interlayer structure (hereinafter, referred to as a "touch screen"), the display unit 151 may be used as an input device in addition to an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. The touch sensor may be configured to sense not only a touched position and a touched area, but also a touch pressure at which a touch object body is touched on the touch sensor. Here, the touch object body may be a finger, a touch pen or stylus pen, a pointer, or the like as an object by which a touch is applied to the touch sensor.

When there is a touch input to the touch sensor, the corresponding signals are transmitted to a touch controller. The touch controller processes the signal(s), and then transmits the corresponding data to the controller 180. Accordingly, the controller 180 may sense which region of the display unit 151 has been touched.

Referring to FIG. 1, a proximity sensor 141 may be arranged at an inner region of the mobile terminal 100 surrounded by the touch screen, or adjacent to the touch screen. The proximity sensor 141 may be provided as an example of the sensing unit 140. The proximity sensor 141 refers to a sensor to sense the presence or absence of an object approaching to a surface to be sensed, or an object disposed adjacent to a surface to be sensed, by using an electromagnetic field or infrared rays without a mechanical contact. The proximity sensor 141 has a longer lifespan and a more enhanced utility than a contact sensor.

The proximity sensor 141 may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity of an object having conductivity (hereinafter, referred to as a "pointer") to the touch screen is sensed by changes of an electromagnetic field. In this case, the touch screen (touch sensor) may be categorized into a proximity sensor.

Hereinafter, for the sake of convenience of brief explanation, a behavior that the pointer is positioned to be proximate onto the touch screen without contact will be referred to as a "proximity touch", whereas a behavior that the pointer substantially comes in contact with the touch screen will be referred to as a "contact touch". For the position corresponding to the proximity touch of the pointer on the touch screen, such position corresponds to a position where the pointer faces perpendicular to the touch screen upon the proximity touch of the pointer.

The proximity sensor 141 senses a proximity touch, and a proximity touch pattern (for example, proximity touch distance, proximity touch direction, proximity touch speed, proximity touch time, proximity touch position, proximity touch moving status, etc.). Information relating to the sensed proximity touch and the sensed proximity touch patterns may be output onto the touch screen.

When the stereoscopic display unit 152 and a touch sensor are configured with an interlayer structure (hereinafter, referred to as a "stereoscopic touch screen") or the stereoscopic display unit 152 and a 3D sensor for detecting a touch operation are combined with each other, the stereoscopic display unit 152 may be used as a 3-dimensional input device.

As an example of the 3D sensor, the sensing unit 140 may include a proximity sensor 141, a stereoscopic touch sensing unit 142, a ultrasound sensing unit 143, and a camera sensing unit 144.

The proximity sensor 141 measures a distance between the sensing object (for example, the user's finger or stylus pen) and a detection surface to which a touch is applied using an electromagnetic field or infrared rays without a mechanical contact. The terminal may recognize which portion of a stereoscopic image has been touched by using the measured distance. In particular, when the touch screen is implemented with a capacitance type, it may be configured such that the proximity level of a sensing object is sensed by changes of an electromagnetic field according to the proximity of the sensing object to recognize a 3-dimensional touch using the proximity level.

The stereoscopic touch sensing unit 142 may be configured to sense the strength or duration time of a touch applied to the touch screen. For example, stereoscopic touch sensing unit 142 senses a user applied touch pressure, and if the applied pressure is strong, then the stereoscopic touch sensing unit 142 recognizes it as a touch for an object located farther from the touch screen.

The ultrasound sensing unit 143 may be configured to sense the location of the sensing object using ultrasound.

For example, the ultrasound sensing unit 143 may be configured with an optical sensor and a plurality of ultrasound sensors. The optical sensor may be formed to sense light, and the ultrasound sensor may be formed to sense ultrasound waves. Since light is far faster than ultrasound waves, the time for light to reach the optical sensor is far faster than the time for ultrasound waves to reach the ultrasound sensor. Accordingly, the location of the wave generating source may be calculated using a time difference between the light and ultrasound waves to reach the optical sensor.

The camera sensing unit 144 may include at least one of a camera 121, a photo sensor, and a laser sensor.

For example, the camera 121 and laser sensor may be combined to each other to sense a touch of the sensing object to a 3-dimensional stereoscopic image. Distance information sensed by the laser sensor is added to a two-dimensional image captured by the camera to acquire 3-dimensional information.

For another example, a photo sensor may be deposited on the display element. The photo sensor may be configured to scan the motion of the sensing object in proximity to the touch screen. More specifically, the photo sensor is integrated with photo diodes and transistors in the rows and columns thereof, and a content placed on the photo sensor may be scanned by using an electrical signal that is changed according to the amount of light applied to the photo diode. In other words, the photo sensor performs the coordinate calculation of the sensing object according to the changed amount of light, and the location coordinate of the sensing object may be detected through this.

The audio output module 153 may output audio data received from the wireless communication unit 110 or stored in the memory 160, in a call-receiving mode, a call-placing mode, a recording mode, a voice recognition mode, a broadcast reception mode, and so on. The audio output module 153 may output audio signals relating to the functions performed in the mobile terminal 100 (e.g., sound alarming a call received or a message received, and so on). The audio output module 153 may include a receiver, a speaker, a buzzer, and so on.

The alarm 154 outputs signals notifying occurrence of events from the mobile terminal 100. The events occurring from the mobile terminal 100 may include call received, message received, key signal input, touch input, and so on. The alarm 154 may output not only video or audio signals, but also other types of signals such as signals notifying occurrence of events in a vibration manner. Since the video or audio signals can be output through the display unit 151 or the audio output unit 153, the display unit 151 and the audio output module 153 may be categorized into part of the alarm 154.

The haptic module 155 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 155 may generate various tactile effects, including not only vibration, but also arrangement of pins vertically moving with respect to a skin being touched, air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 155 may be configured to transmit tactile effects through a user's direct contact, or a user's muscular sense using a finger or a hand. The haptic module 155 may be implemented in two or more in number according to the configuration of the mobile terminal 100.

The memory 160 may store a program for processing and controlling the controller 180. Alternatively, the memory 160 may temporarily store input/output data (e.g., phonebook, messages, still images, videos, and the like). Also, the memory 160 may store data related to various patterns of vibrations and sounds output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate in association with a web storage which performs the storage function of the memory 160 on the Internet.

The interface unit 170 may generally be implemented to interface the terminal with external devices connected to the mobile terminal 100. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

On the other hand, the identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the mobile terminal 100 via a port.

Furthermore, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

Furthermore, the controller 180 can perform a pattern recognition processing so as to recognize writing or drawing input carried out on the touch screen as text or image.

Furthermore, the controller 180 may implement a lock state for limiting the user's control command input to applications when the state of the terminal satisfies a preset condition. Furthermore, the controller 180 may control a lock screen displayed in the lock state based on a touch input sensed through the display unit 151 in the lock state.

The power supply unit 190 receives external and internal power to provide power required for various components under the control of the controller 180.

Various embodiments described herein may be implemented in a computer or similar device readable medium using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units designed to perform the functions described herein. In some cases, such embodiments may be implemented in the controller 180 itself.

For software implementation, the embodiments such as procedures or functions described in the present disclosure may be implemented with separate software modules. Each of the software modules may perform at least one function or operation described in the present disclosure.

Software codes can be implemented by a software application written in any suitable programming language. The software codes may be stored in the memory 160 and executed by the controller 180.

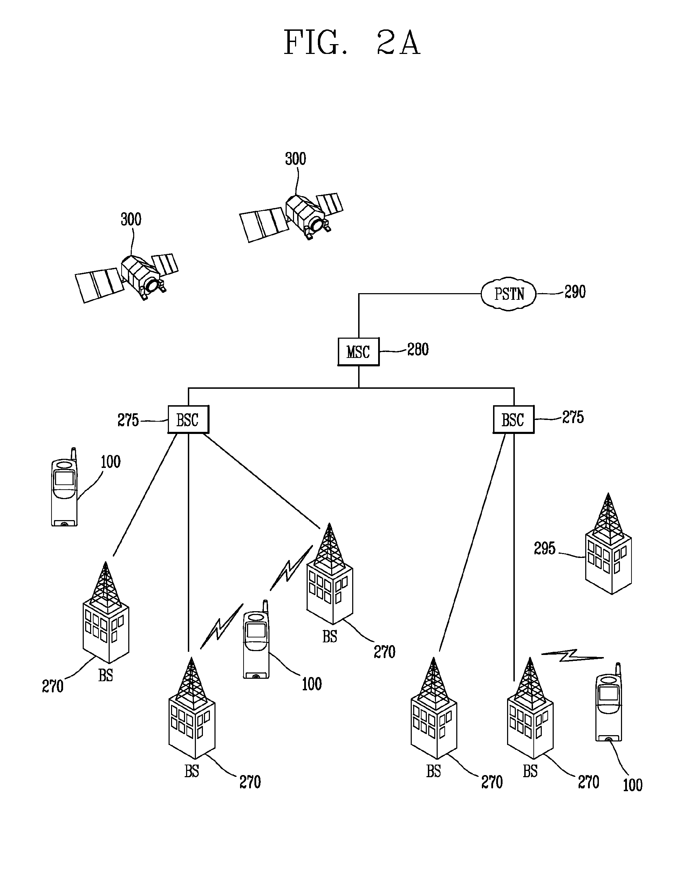

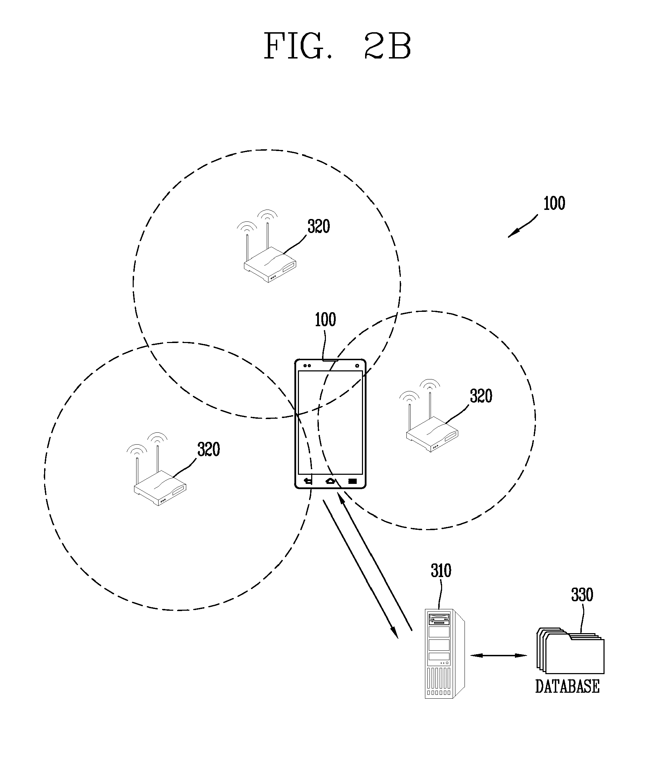

Next, a communication system that can be implemented through the mobile terminal 100 according to the present disclosure will be described. FIGS. 2A and 2B are conceptual views illustrating a communication system in which a mobile terminal 100 according to the present disclosure is operable.

First, referring to FIG. 2A, the communication system may use different wireless interfaces and/or physical layers. For example, wireless interfaces that can be used by the communication system may include, frequency division multiple access (FDMA), time division multiple access (TDMA), code division multiple access (CDMA), universal mobile telecommunications system (UMTS) (particularly, long term evolution (LTE)), global system for mobile communications (GSM), and the like.

Hereinafter, for the sake of convenience of explanation, the description disclosed herein will be limited to CDMA. However, it is apparent that the present invention may be also applicable to all communication systems including a CDMA wireless communication system.

As illustrated in FIG. 2A, a CDMA wireless communication system may include a plurality of terminals 100, a plurality of base stations (BSs) 270, a plurality of base station controllers (BSCs) 275, and a mobile switching center (MSC) 280. The MSC 280 may interface with a Public Switched Telephone Network (PSTN) 290, and the MSC 280 may also interface with the BSCs 275. The BSCs 275 may be connected to the BSs 270 via backhaul lines. The backhaul lines may be configured in accordance with at least any one of E1/T1, ATM, IP, PPP, Frame Relay, HDSL, ADSL, or xDSL, for example. Further, the system illustrated in FIG. 2A may include a plurality of BSCs 275.

Each of the plurality of BSs 270 may include at least one sector, each sector having an omni-directional antenna or an antenna indicating a particular radial direction from the base station 270. Alternatively, each sector may include two or more antennas with various forms. Each of the BSs 270 may be configured to support a plurality of frequency assignments, each frequency assignment having a particular spectrum (for example, 1.25 MHz, 5 MHz, etc.).

The intersection of a sector and frequency assignment may be referred to as a CDMA channel. The BSs 270 may also be referred to as Base Station Transceiver Subsystems (BTSs). In this case, the term "base station" may collectively refer to a BSC 275, and at least one BS 270. The base stations may also indicate "cell sites". Alternatively, individual sectors for a specific BS 270 may also be referred to as a plurality of cell sites.

As illustrated in FIG. 2A, the Broadcasting Transmitter (BT) 295 may transmit broadcasting signals to the terminals 100 being operated within the system. The broadcast receiving module 111 as illustrated in FIG. 1 may be provided in the mobile terminal 100 to receive broadcast signals transmitted by the BT 295.

In addition, FIG. 2A illustrates several global positioning system (GPS) satellites 300. Such satellites 300 facilitate locating at least one of a plurality of terminals 100. Though two satellites are illustrated in FIG. 2A, location information may be obtained with a greater or fewer number of satellites. The location information module 115 as illustrated in FIG. 1 may cooperate with the satellites 300 as illustrated in FIG. 2A to obtain desired location information. However, other types of position detection technology, all types of technologies capable of tracing the location may be used in addition to a GPS location technology. Furthermore, at least one of the GPS satellites 300 may alternatively or additionally provide satellite DMB transmissions.

During the operation of a wireless communication system, the BS 270 may receive reverse-link signals from various terminals 100. At this time, he terminals 100 may perform calls, message transmissions and receptions, and other communication operations. Each reverse-link signal received by a specific base station 270 may be processed within that specific base station 270. The processed resultant data may be transmitted to an associated BSC 275. The BSC 275 may provide call resource allocation and mobility management functions including the systemization of soft handoffs between the base stations 270. Furthermore, the BSCs 275 may also transmit the received data to the MSC 280, which provides additional transmission services for interfacing with the PSTN 290. Furthermore, similarly, the PSTN 290 may interface with the MSC 280, and the MSC 280 may interface with the BSCs 275. The BSCs 275 may also control the BSs 270 to transmit forward-link signals to the terminals 100.

Next, a method of acquiring the location information of a terminal using a WiFi (Wireless Fidelity) positioning system (WPS) will be described with reference to FIG. 2B.

The WiFi positioning system (WPS) 300 refers to a location determination technology based on a wireless local area network (WLAN) using WiFi as a technology for tracking the location of the mobile terminal 100 using a WiFi module provided in the mobile terminal 100 and a wireless access point 320 for transmitting and receiving to and from the WiFi module.

The WiFi positioning system 300 may include a WiFi location determination server 310, a mobile terminal 100, a wireless access point (AP) 320 connected to the mobile terminal 100, and a database 330 stored with any wireless AP information.

The WiFi location determination server 310 extracts the information of the wireless AP 320 connected to the mobile terminal 100 based on a location information request message (or signal) of the mobile terminal 100. The information of the wireless AP 320 may be transmitted to the WiFi location determination server 310 through the mobile terminal 100 or transmitted to the WiFi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The WiFi location determination server 310 receives the information of the wireless AP 320 connected to the mobile terminal 100 as described above, and compares the received wireless AP 320 information with information contained in the pre-established database 330 to extract (or analyze) the location information of the mobile terminal 100.

On the other hand, referring to FIG. 2B, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the WiFi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the WiFi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

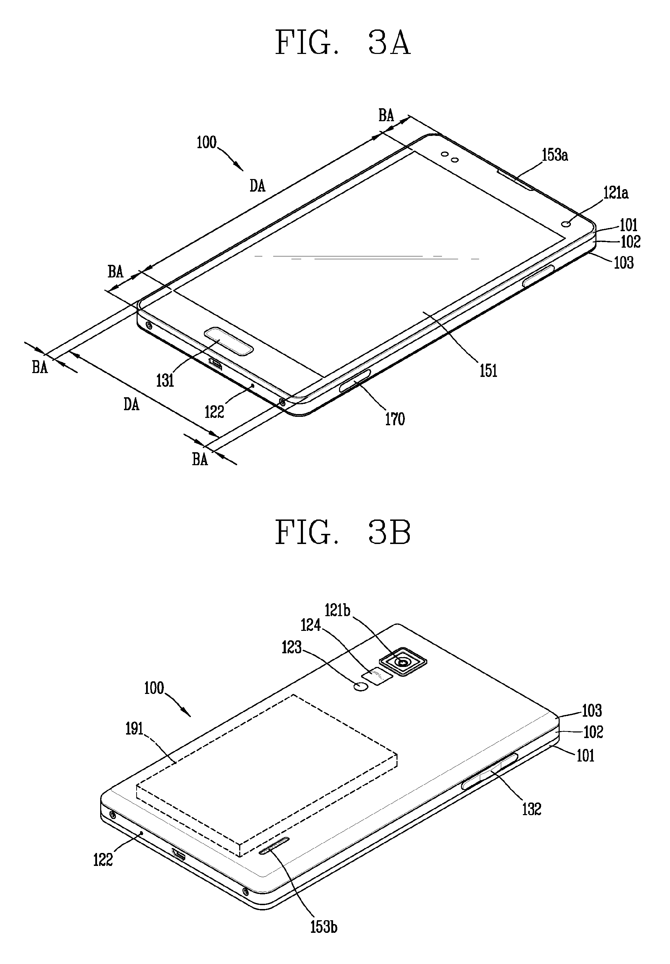

FIG. 3A is a front perspective view illustrating an example of the mobile terminal 100 associated with the present disclosure.

The mobile terminal 100 disclosed herein is provided with a bar-type terminal body. However, the present invention may not be limited to this, but also may be applicable to various structures such as watch type, clip type, glasses type or folder type, flip type, swing type, swivel type, or the like, in which two and more bodies are combined with each other in a relatively movable manner.

The body includes a case (casing, housing, cover, etc.) forming the appearance of the terminal. In this embodiment, the case may be divided into a front case 101 and a rear case 102. Various electronic components is incorporated into a space formed between the front case 101 and the rear case 102. At least one middle case may be additionally disposed between the front case 101 and the rear case 102, and a battery cover 103 for covering the battery 191 may be detachably configured at the rear case 102.

The cases may be formed by injection-molding a synthetic resin or may be also formed of a metal, for example, stainless steel (STS), titanium (Ti), or the like.

A display unit 151, a first audio output module 153a, a first camera 121a, a first manipulation unit 131 and the like may be disposed on a front surface of the terminal body, and a microphone 122, an interface unit 170, a second manipulation unit 132 and the like may be provided on a lateral surface thereof.

The display unit 151 may be configured to display (output) information being processed in the mobile terminal 100. The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

The display unit 151 may include a touch sensing means to receive a control command by a touch method. When a touch is made to any one place on the display unit 151, the touch sensing means may be configured to sense this touch and enter the content corresponding to the touched place. The content entered by a touch method may be a text or numerical value, or a menu item capable of indication or designation in various modes.

The touch sensing means may be formed with transparency to allow visual information displayed on the display unit 151 to be seen, and may include a structure for enhancing the visibility of a touch screen at bright places. Referring to FIG. 3A, the display unit 151 occupies a most portion of the front surface of the front case 101.

The first audio output unit 153a and the first camera 121a are disposed in a region adjacent to one of both ends of the display unit 151, and the first manipulation input unit 131 and the microphone 122 are disposed in a region adjacent to the other end thereof. The second manipulation interface 132 (refer to FIG. B), the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this case, a hole independently formed to output audio sounds may not be seen or hidden in terms of appearance, thereby further simplifying the appearance of the mobile terminal 100. However, the present invention may not be limited to this, but a hole for releasing the sounds may be formed on the window.

The first camera 121a processes video frames such as still or moving images obtained by the image sensor in a video call mode or capture mode. The processed video frames may be displayed on the display unit 151.

The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

In the present drawing, it is illustrated on the basis that the first manipulation unit 131 is a touch key, but the present disclosure may not be necessarily limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being output from the first audio output module 153a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3B is a rear perspective view illustrating mobile terminal 100 illustrated in FIG. 3A.

Referring to FIG. 3B, a second camera 121b may be additionally mounted at a rear surface of the terminal body, namely, the rear case 102. The second camera 121b has an image capturing direction, which is substantially opposite to the direction of the first camera unit 121a (refer to FIG. 3A), and may have a different number of pixels from that of the first camera unit 121a.

For example, it is preferable that the first camera 121a has a relatively small number of pixels enough not to cause difficulty when the user captures his or her own face and sends it to the other party during a video call or the like, and the second camera 121b has a relatively large number of pixels since the user often captures a general object that is not sent immediately. The first and the second camera 121a, 121b may be provided in the terminal body in a rotatable and popupable manner.

Furthermore, a flash 123 and a mirror 124 may be additionally disposed adjacent to the second camera 121b. The flash 123 illuminates light toward an object when capturing the object with the second camera 121 b. The mirror 124 allows the user to look at his or her own face, or the like, in a reflected way when capturing himself or herself (in a self-portrait mode) by using the second camera 121b.

A second audio output unit 153b may be additionally disposed at a rear surface of the terminal body. The second audio output unit 153b together with the first audio output unit 153a (refer to FIG. 3A) can implement a stereo function, and may be also used to implement a speaker phone mode during a phone call.

An antenna (not shown) for receiving broadcast signals may be additionally disposed at a lateral surface of the terminal body in addition to an antenna for making a phone call or the like. The antenna constituting part of the broadcast receiving module 111 (refer to FIG. 1) may be provided in the terminal body in a retractable manner.

A power supply unit 190 (refer to FIG. 1) for supplying power to the mobile terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

Furthermore, the extracted location information of the mobile terminal 100 may be transmitted to the mobile terminal 100 through the WiFi location determination server 310, thereby allowing the mobile terminal 100 to acquire location information.

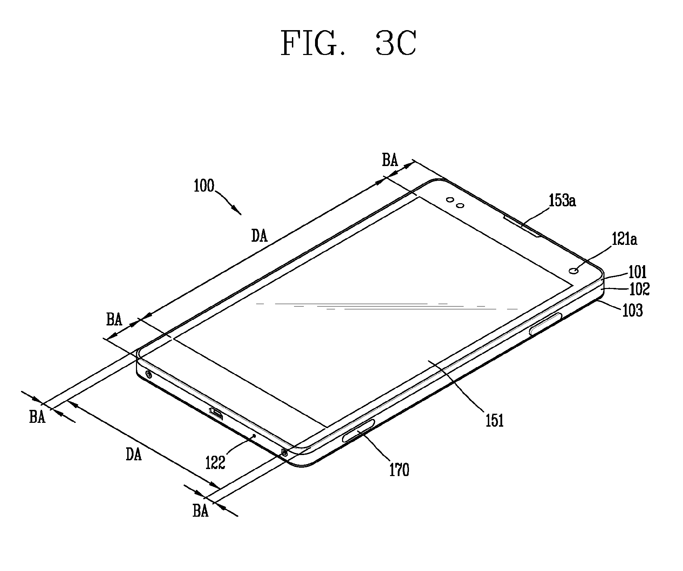

FIG. 3C is a front perspective view illustrating another example of a mobile terminal 100 associated with the present disclosure. A mobile terminal according to the present embodiment is substantially the same as the configuration of a mobile terminal in FIG. 3A excluding the first manipulation unit 131. Accordingly, the same elements are designated with the same numeral references and their redundant description will be omitted.

In a mobile terminal according to the present embodiment, the first manipulation unit 131 is not formed on the bezel portion formed to surround the display unit. For example, an icon corresponding to the function of the first manipulation unit 131 in FIG. 3A may be displayed on the display unit 151.

Referring to FIGS. 3A and 3B, a front surface portion of the mobile terminal may include a display area (DA) and a bezel area (BA). The display area (DA) corresponds to a display region of the display unit 151, and the bezel area (BA) is formed to surround the display area (DA). At least one region of the bezel area (BA) of the mobile terminal according to the present disclosure is formed to receive a user's consecutive touch input.

Here, consecutive touch input denotes an input method of allowing an object (user's finger) for applying a touch input to be brought into contact with one region of the bezel portion and then continuously applied while moving to another region. For example, it may correspond to a dragging type touch input.

Referring to FIG. 3A, the first manipulation unit 131 is formed on the bezel area (BA). According to the present embodiment, a touch input applied to the first manipulation unit 131 may be distinguished from a consecutive touch input applied to the bezel area (BA). Accordingly, a touch input applied to the first manipulation unit 131 and a consecutive touch input applied to one region of the bezel area (BA) including the first manipulation unit 131 are formed with control commands for controlling different functions.

A touch sensing unit is formed in the bezel area (BA) region to receive a touch input applied to the bezel area (BA). Hereinafter, the structure of a touch sensing unit for receiving a touch input applied to the mobile terminal will be described.

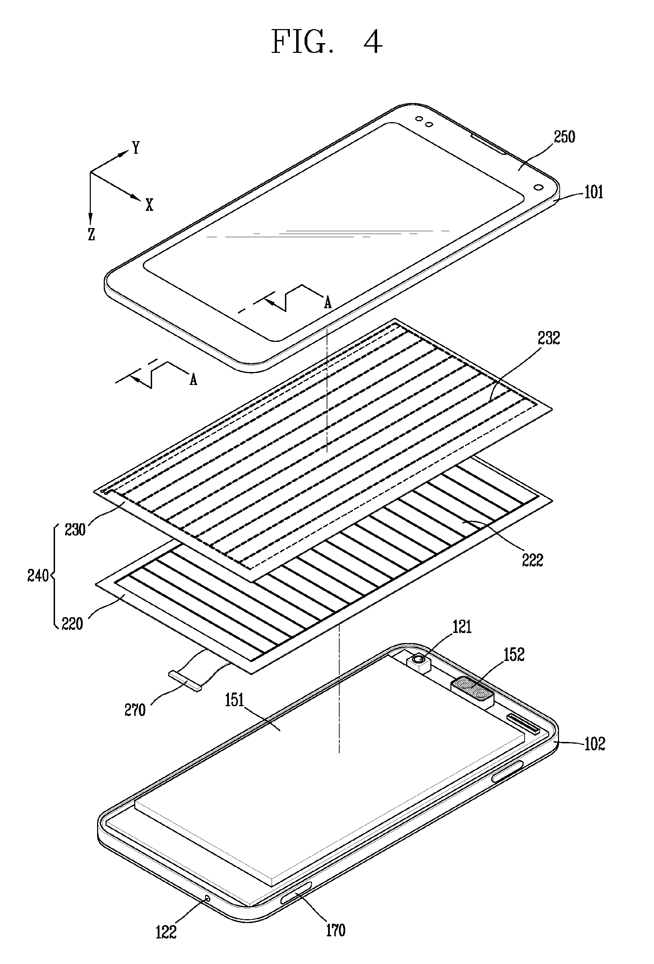

FIG. 4 is a view illustrating the configuration of a mobile terminal 100 having a touch sensing unit 240 as an exploded perspective view of the mobile terminal 100 in FIG. 2.

Referring to FIG. 4, a printed circuit board 217 is mounted on the rear case 102. The printed circuit board 217 may be configured as an example of the controller 180 (see FIG. 1) for operating various functions of the mobile terminal 100. As illustrated in the drawing, the audio output module 152, camera 121, and the like may be mounted on the printed circuit board 217.

A display unit 151 electrically connected to the printed circuit board 217 is disposed at one surface of the printed circuit board 217. The display unit 151 may have an area corresponding to a region through which light of the window 250 passes. Through this, the user can recognize visual information displayed on the display unit 151 from the outside.

On the other hand, the window 250 is disposed at one surface of the touch sensing unit 240 configured to sense a touch input.

The touch sensing unit 240 according to an embodiment of the present disclosure may be disposed between the window 250 and the display unit 151 or disposed within the display unit 151, and the touch sensing unit 240 may be formed with a light transmitting material to transmit an image formed on the display unit 151. A region corresponding to a portion through which light is transmitted from the touch sensing unit 240 to the window 250 forms an input region. The touch sensing unit 240 is configured to convert a change of charge amount or the like produced on a specific portion thereof to an electrical input signal.

The window 250 coupled to one surface of the touch sensing unit 240 may be configured with a light transmitting material, for example, a light transmitting synthetic resin, a tempered glass or the like. The window 250 may be formed to include a portion through which light cannot transmit.

An audio hole corresponding to the audio output module 152 and an image window corresponding to the camera 121 may be formed at one end portion of the touch sensing unit 240 and window 250. The image window may be separately configured with a light transmitting material or integrated into the touch sensing unit 240 and window 250 as a portion thereof.

The touch sensing unit 240 may include a first and a second touch sheet 220,230 disposed to be layered to each other. According to an embodiment of the present disclosure, a touch pattern of the first touch sheet 220 is formed to be extended in the first direction, and configured to sense a touch input in the first direction. The second touch sheet 230 is disposed to cover the first touch sheet 220. A touch pattern of the second touch sheet 230 is formed to be extended in the second direction, and configured to sense a touch input in the second direction.

For example, the first touch sheet 220 may be formed to sense a touch input in the X-axis direction by a touch pattern 222 formed in the width direction (X-axis direction) of the mobile terminal 100, and the second touch sheet 230 may be formed to sense a touch input in the Y-axis direction by a touch pattern 232 formed in the length direction (Y-axis direction) of the mobile terminal 100. The first and the second touch sheet 220, 230 may be a light transmitting conductive layer, such as an indium tin oxide (ITO) film, a carbon nanotube (CNT) film, and the like.

The touch sensing unit 240 measures a change of charge amount in the first and the second direction through the first and the second touch sheet 220, 230. The touch sensing unit 240 is electrically connected to the printed circuit board 217. The first and the second touch sheet 220, 230 are connected to a detection unit (not shown), respectively, to detect a touch input to an input region using a change of the sensed charge amount.

For example, when a conductor such as a finger, a touch pen or the like makes a touch to the window 250, electrons on the window 250 move to the conductor, and the touch sensing unit 240 senses a change of charge amount to measure its coordinate.

A flexible printed circuit board 270 is configured to electrically connect the first and the second touch sheet 220, 230 to the printed circuit board 217, respectively, and the flexible printed circuit board 270 may be electrically connected to a terminal portion 272.

A plurality of flexible printed circuit boards 270 may be formed thereon. For example, the flexible printed circuit boards 270 may be disposed at both ends of the mobile terminal 100 in the length direction (Y-axis direction), respectively.

Though the mobile terminal 100 provided with a capacitive touch sensing unit 240 has been described in the above, the mobile terminal 100 may be a mobile terminal provided with another touch scheme, for example, a resistive touch sensing unit.

In case of a mobile terminal provided with a resistive touch sensing unit, a window 250, a touch sensing unit 240 including the first and the second touch sheet 220, 230, and a touch film (not shown) are sequentially disposed on an upper surface of the display unit.

When any one position of the touch film is pressurized through a user's hand or touch pen, the corresponding portion of the touch sensing unit is pressed down. As a result, the first and the second touch sheet are brought into contact with each other at a pressure point, and the controller 180 senses a pressure point to generate a touch input corresponding to the pressure point.

The touch sensing unit 240 according to the present disclosure is formed to be extended to a region corresponding to the display unit 151 and the bezel area (BA). Hereinafter, the structure of a wiring unit extended from the touch sensing unit to transfer a signal will be described.

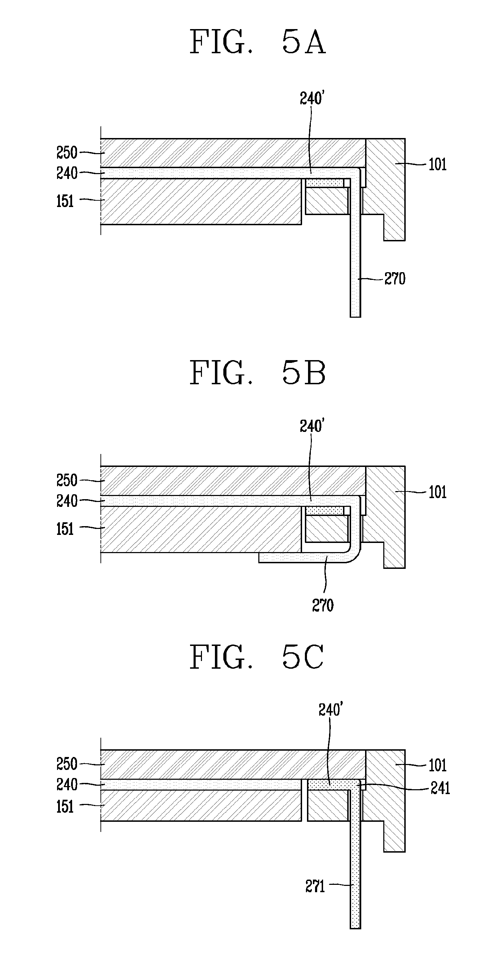

FIGS. 5A through 5C are partial cross-sectional views cut along line A-A in FIG. 4.

Referring to FIG. 5A, the touch sensing unit 240 is extended up to the substantially same region as that of an edge of the window 250. The wiring unit 270 is formed not to face the window 250 and thus all regions on the window may be formed to receive a touch input.

The wiring unit 270 is extended from the touch sensing unit 240 and bent toward an inner space of the mobile terminal body. The front case 101 may include a frame supporting the display unit, and the frame may include a hole formed to pass through toward the inner space thereof. In other words, the wiring unit 270 is formed to face a lateral surface of the mobile terminal.

Though not shown in detail in the drawing, when one region of the touch sensing unit formed with the touch pattern is formed to face the lateral surface, a lateral surface of the mobile terminal body can receive a user's consecutive touch input.

Referring to FIG. 5B, the wiring unit 270 may be formed to be adhered to an inner surface of the display unit. Though not shown in the drawing, an adhesive member may be formed between an inner surface of the display unit and the wiring unit 270. Accordingly, the inner structure may be further simplified.

Referring to FIG. 5C, when the display unit is configured with an AMOLED display panel formed integrally with the touch sensing unit 240, the moving sensing unit may include an additional touch sensing unit 241.

The additional touch sensing unit 241 is formed at a space between the display unit 151 and the front case 101. The additional touch sensing unit 241 is adhered to an inner surface of the window, and formed with an adhesive member.

Hereinafter, various forms of a specific touch sensing unit will be described.

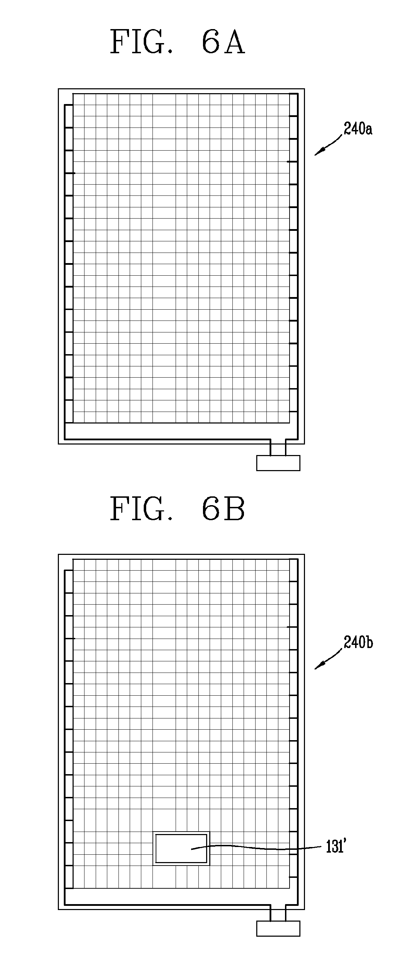

FIGS. 6A through 6F are conceptual views for explaining the structure of a touch sensing unit according to various embodiments.

Referring to FIG. 6A, the first touch sensing unit 240a may include a touch pattern formed to correspond to the entire region of the window. Accordingly, the bezel area (BA) adjacent to an upper and a lower portion of the display unit 151 may receive a touch input. However, the reception of a touch input may be limited in one region of the bezel area (BA) on the left and right lateral surfaces formed with electrical wirings.

The bezel area (BA) is formed to receive a consecutive touch input by the first touch sensing unit 240a in which a predetermined touch pattern is integrally formed over the entire region facing the window 250.

Referring to FIG. 6B, the second touch sensing unit 240b may include a hole for forming the pressurized first manipulation unit 131. The second touch sensing unit 240b is substantially the same as the first touch sensing unit 240a excluding the hole. Accordingly, the redundant description thereof will be omitted.

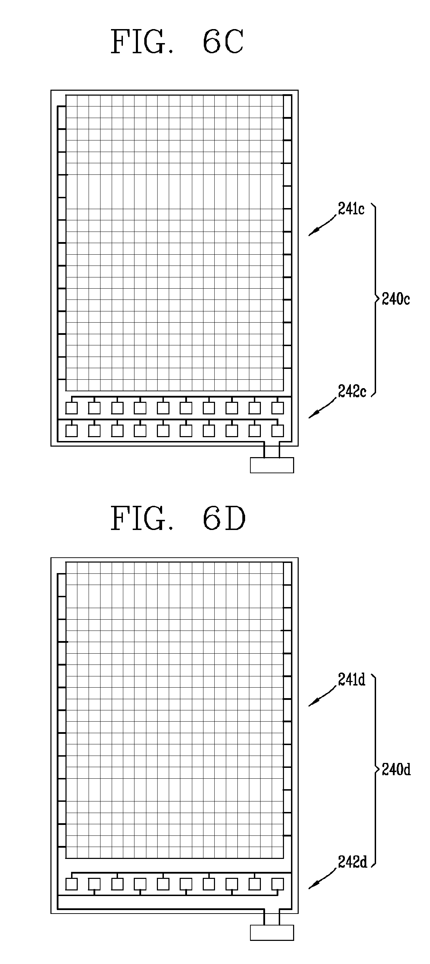

Referring to FIG. 6C, the third touch sensing unit 240c may include a first sensing unit 241c configured with a touch pattern formed in a region corresponding to the display unit 151 and a second sensing unit 242c configured with a plurality of sensing regions corresponding to the bezel area (BA). A plurality of sensing regions constituting the second sensing unit may be configured with a plurality of rows.

For example, as illustrated in the drawing, they may be configured with two row, but may not be necessarily limited to this. In this case, a consecutively applied touch input may be sensed along the width direction of the bezel area (BA).

On the other hand, the fourth touch sensing unit 240d illustrated in FIG. 6D may include a first sensing unit 241d configured with a touch pattern and a second sensing unit 242d configured with a plurality of sensing regions. However, the second sensing unit 242d is configured with a plurality of sensing regions arranged in one row. According to the present embodiment, a touch input applied to the bezel area (BA) receives a touch input applied along one direction but cannot sense a touch input in another direction crossed with said one direction.

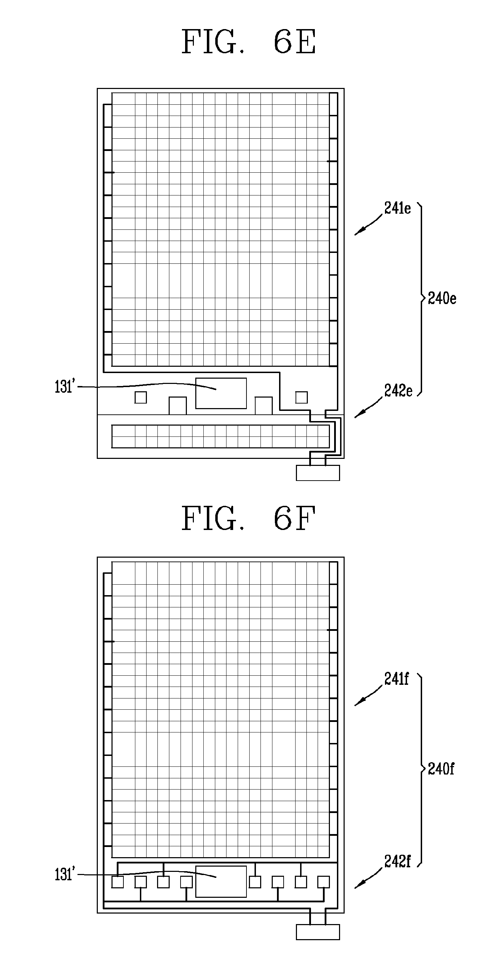

Referring to FIG. 6E, the fifth touch sensing unit 240e may include a first sensing unit 241e configured with a touch pattern formed in a region corresponding to the display unit 151 and at least one sensing region and an additional touch sensing unit 242e configured with a touch pattern to correspond to the bezel area (BA).

As illustrated in the drawing, the additional touch sensing unit 242e may be formed in a region adjacent to the sensing region. The touch sensing unit 242e may be formed with an additional configuration, and electrically connected to the first sensing unit 241 e. It may be possible to sense a consecutive touch input distinguished from a touch input applied to a sensing region of the first sensing unit 241e by the additional touch sensing unit 242e.

Referring to FIG. 6F, the sixth touch sensing unit 240f may include a first sensing unit 241f configured with a touch pattern and a second sensing unit 242f configured with a plurality of sensing regions. The second sensing unit 242f is formed to face the bezel area (BA), and some of the plurality of sensing regions correspond to the first manipulation unit 131.

In other words, the second sensing unit 242f forms a sensing region at a space between the first manipulation unit 131. A sensing region corresponding to the first manipulation unit 131 forms a specific control command by a touch, but the remaining sensing region does not form a specific control command. Furthermore, all sensing regions applied to the second sensing unit 242f sense a consecutive touch input to generate another control command.

In other words, the present invention is formed to receive a consecutive touch input applied to the bezel area (BA) in which the first manipulation unit 131 is formed and the bezel area (BA) in which the manipulation unit is not formed. Hereinafter, a control method implemented by a consecutive touch input will be described.

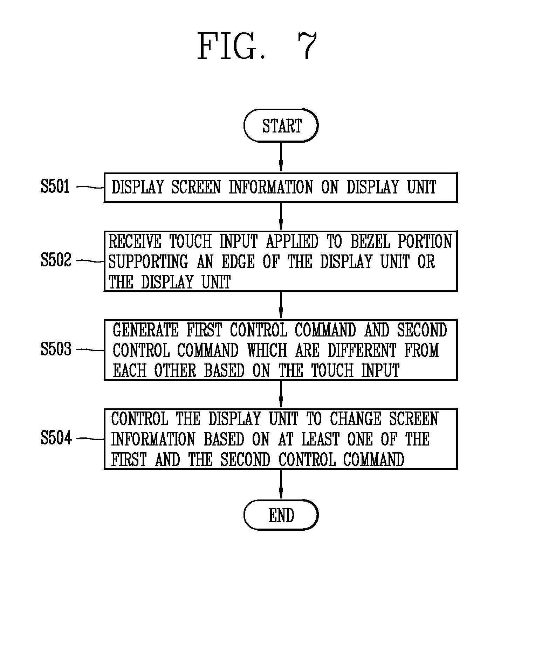

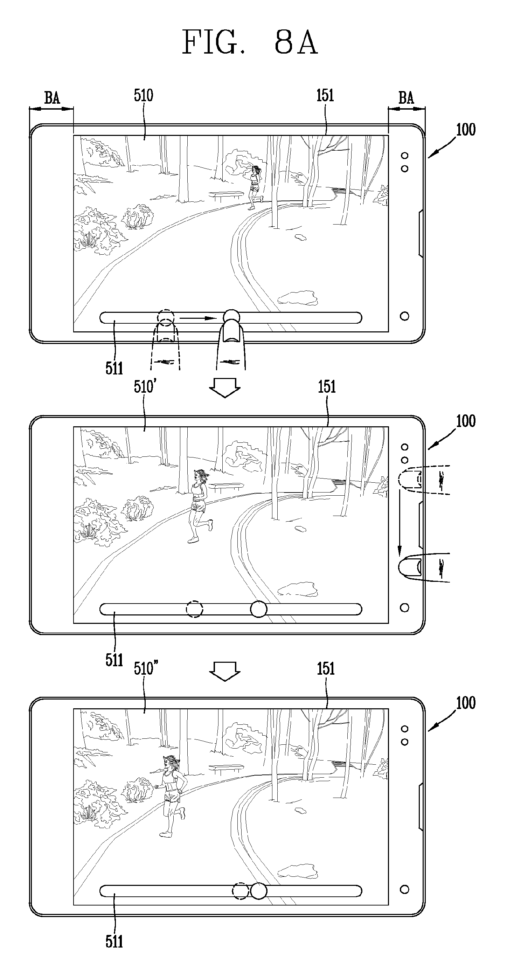

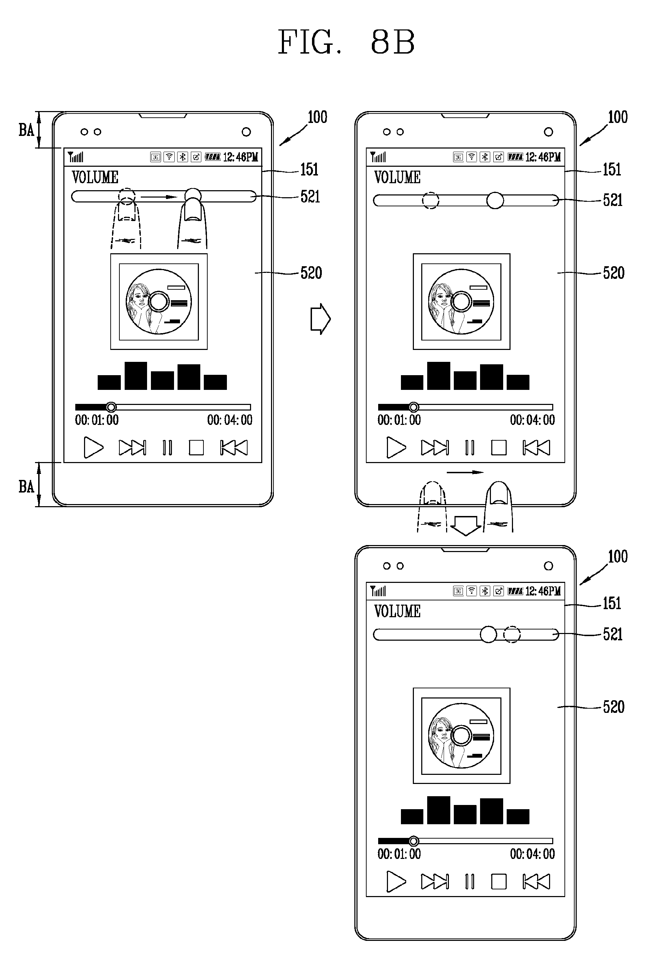

FIG. 7 is a flow chart for explaining a control method of a mobile terminal according to an embodiment of the present disclosure, and FIGS. 8A through 8D are conceptual views for explaining a control method of FIG. 7 according to each embodiment.

Referring to FIGS. 3B, 7 and 8A, the display unit 151 displays screen information 510 (S501). The display unit 151 receives a user's touch input. Here, the screen information 510 as a graphic image allowed to be displayed on the display unit 151 may be displayed regardless of the type thereof. For example, the screen information may correspond to an execution screen of an application, an electronic document file, a playback screen of a media file, an address book screen, a home screen page, or the like.

Furthermore, the touch sensing unit 240 is formed over the entire region of the display unit 151 and thus the display unit 151 may receive a user's touch input over the entire region. The screen information 510 displayed on the display unit 151 may include a graphic image formed to generate a control command by a touch input, and the controller 180 generates a predetermined control command and controls a specific function of the mobile terminal 100 when a touch input is applied to the graphic image.

FIG. 8A(a) illustrates the display unit 151 that displays the playback screen of a video file as the screen information 510. The screen information 510 may include a first graphic image 511 for changing the playback position of the video file. The first graphic image 511 is formed with a bar shape to include information on a playback time and a current playback time point of the video file.

The controller 180 controls the display unit 151 to change the screen information 510 based on a touch input applied to one region on the display unit 151 that displays the first graphic image 511 of the screen information 510. Here, the touch input may correspond to a consecutive touch input while moving along the first graphic image 511, and may correspond to a dragging touch input.

In other words, the controller 180 generates a first control command based on a touch input applied to the display unit 151, and controls the display unit 151 to display first changed screen information 510' corresponding to the changed video playback section based on the first control command. The changed section is controlled to correspond to a touch range of a touch input applied to the display unit 151.

For the sake of convenience of explanation, the position movement of the bezel area (BA) in contact with his or her finger has been expressed as a touch range, but the controller 180 senses an input from a position coordinate of the bezel area (BA) initially brought into contact with the finger to a position coordinate of the bezel area (BA) recently brought into contact therewith, and controls the function of the mobile terminal based on this input. In other words, the controller 180 may execute the same function with a different method (for example, a differently defined change of playback section) based on the size of a coordinate change on the bezel area (BA). However, a change of the touched coordinate will be described below as a touch range for the sake of convenience of explanation.

The controller 180 moves it to a predetermined first reference section (a change of ten frames) according to a touch range of a predetermined touch input (i.e., a distance from the point to which an initial touch input is applied to the point currently being touched).

The bezel area (BA) receives a user's touch input, and the controller 180 generates a second control command for controlling the display unit 151 based on a consecutive touch input applied to the bezel area (BA).

The controller 180 generates the second control command based on a user's touch input moving in one direction along the bezel area (BA). However, referring to FIG. 3A, the consecutive touch input is distinguished from a touch input applied to the first manipulation unit 131 formed on the bezel area (BA) by the controller 180. In other words, a consecutive touch input applied to the bezel area (BA) is defined by an object (for example, a user's finger) moving in one direction for a predetermined period of time. Accordingly, the second control command is distinguished from a signal input by means of a touch input or a pressure applied to the first manipulation unit 131.

The second control command is distinguished from the first control command. The functions controlled by the first and the second control command may be set in a substantially same or different manner. First, an embodiment of performing the substantially same function by the first and the second control command will be described.

The bezel area (BA) receives a consecutively applied touch input, and the controller 180 generates a second control command for controlling the display unit 151. The controller 180 changes the playback section of video displayed on the display unit 151 based on the second control command.

The controller 180 defines a second reference section corresponding to a movement length of the consecutive touch input to be different from the first reference section. For example, the controller 180 controls the display unit 151 to display second screen information 510" changed to a second reference section (for example, five frames) which is shorter than the first reference section according to a predetermined touch range.

In other words, the controller 180 may change a playback section in a more precise manner by a touch input applied to the bezel area (BA) when compared to a touch input applied to the display unit 151. However, it may not be necessarily limited to this, and the controller 180 may control the display unit 151 to change it to a wider playback section based on a consecutive touch input applied to the bezel area (BA) display so as to display the changed screen information.

In other words, the controller 180 generates a first control command or second control command based on a consecutive touch input applied to the display unit 151 or the bezel area (BA) (S503). The first and the second control command are both control commands for changing the playback section of a video file to display the changed screen information.

The controller 180 controls the display unit 151 based on the second control command when the touch input is applied to the bezel area (BA) (S504).

According to the present embodiment, the mobile terminal receives a touch input applied to the display unit 151 and a consecutive touch input applied to the bezel area (BA). A control command capable of the playback section of a video playback screen is generated based on each touch input, but the extent of changing a control value of a specific function is differently defined based on a distinct region to which the touch input is applied.

In other words, the section of video is changed by the first and the second control command, and the size of a changed section according to a touch range of a consecutive touch input is differently controlled according to the first and the second control command.

According to the present embodiment, the control level of a substantially same function may be determined according to the section to which a touch input is applied. However, an object controlled by the display unit 151 and the bezel area (BA) with a different control level is not necessarily limited to the display unit 151.

A control method of controlling a speaker to adjust the volume based on the first and the second control command will be described with reference to 8B. The display unit 151 displays screen information 520 configured with the execution screen of a music play application. The screen information 520 may include a second graphic image 521 for notifying a volume output with a current music, and adjusting the volume of the music. The second graphic image 521 may be formed with a bar shape.

When a user's touch input is applied to the second graphic image 521, the controller 180 controls the audio output module 153 to adjust the volume of a sound output from the audio output module 153. The display unit 151 is controlled to change and display the adjusted second graphic image 521. Here, a touch input applied to the second graphic image 521 may correspond to a consecutive dragging scheme, but may not be necessarily limited to this.

When the consecutive touch input is applied to the display unit 151, the controller 180 generates a first control command for decreasing or increasing the volume to correspond to a touch range of the touch input, and controls the audio output module 153 based on the control command. The controller 180 defines a minimum volume adjustment section corresponding to the minimum touch range of a predetermined touch input, and adjusts the volume in proportion to a touch range of the touch input.

On the other hand, the controller 180 generates a second control command for adjusting the volume based on a touch input applied to the bezel area (BA). A touch input applied to the bezel area (BA) corresponds to a consecutive touch input moving in one direction along the bezel area (BA). The user may apply a consecutive touch input in the right or left direction as illustrated in the drawing to adjust the volume.

The controller 180 defines a minimum volume adjustment section corresponding to the minimum touch range of a predetermined touch input on the bezel area (BA), and adjusts the volume in proportion to a touch range of the touch input. The minimum volume adjustment section may be defined to be less than a minimum volume adjustment section corresponding to the first control command. Accordingly, the user may apply a touch input to the bezel area (BA) to control volume adjustment in a more precise manner.

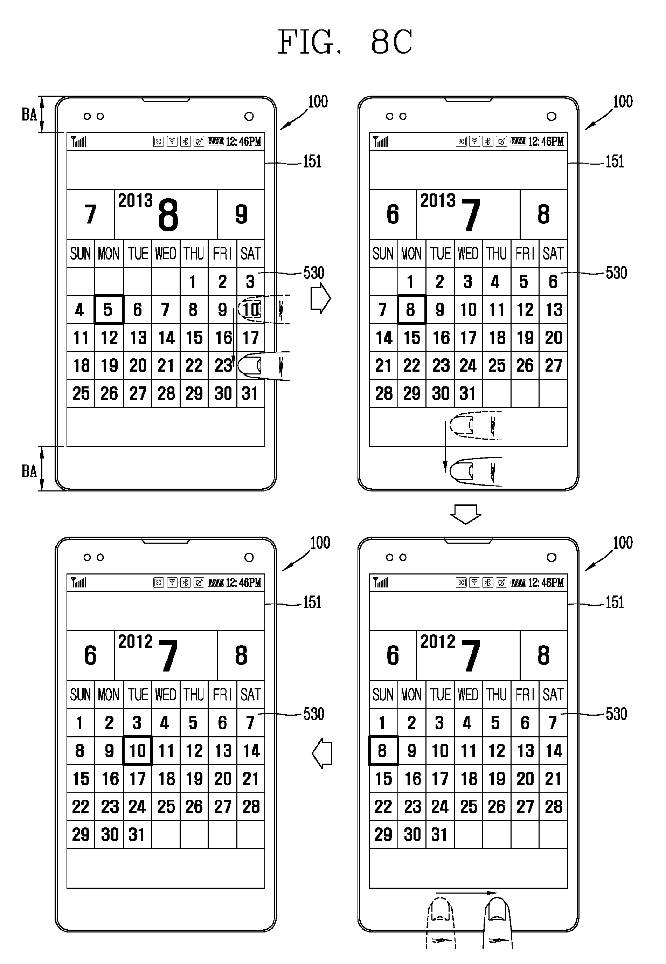

A control method of changing content constituting screen information will be described with reference to FIG. 8C. Referring to FIG. 8C, the display unit 151 displays screen information 530 configured with the execution screen of a calendar application capable of providing information on a date or entering a schedule. For example, the screen information may be configured with a monthly based calendar screen, and the user may apply a touch input to select a specific date. The display unit 151 may display a monthly based calendar including a current date, and display the current date processed with a highlight attribute.

The screen information may include a plurality of content corresponding to year, month and date, and information corresponding to the content may be switched based on a user's touch input.

First, the controller 180 generates a first control command for switching to a calendar corresponding to the month changed based on a consecutive touch input applied to the display unit 151. For example, when a dragging touch input for moving it to a lower region of the display unit 151 is applied thereto, the controller 180 controls the display unit 151 to display the calendar for the previous month.

As illustrated in FIG. 8C, the controller 180 controls the display unit 151 to switch the calendar for August, 2013 to the calendar for July, 2013 based on a dragging touch input applied in the length direction of the display unit 151.

In other words, the controller 180 forms a first control command for changing screen information corresponding to the month of the content based on a touch input applied to the display unit 151.

On the other hand, the controller 180 generates a second control command for switching it to a calendar corresponding to the changed year based on a consecutive touch input applied to the bezel area (BA). For example, the controller 180 display a calendar for the previous or next year to this year based on a dragging touch input consecutively applied along the width direction of the bezel area (BA).

As illustrated in FIG. 8C, the controller 180 may switch the calendar for July, 2013 to the calendar for July, 2012 based on a dragging touch input applied along the width direction of the bezel area (BA). In other words, the controller 180 may change screen information corresponding to the year of the content based on a touch input applied along the width direction of the bezel area (BA).

Furthermore, the controller 180 generates a third control command for changing the selected date (day) based on a consecutive touch input applied in the length direction of the bezel area (BA). According to the present embodiment, the bezel area (BA) is formed to receive consecutive touch inputs in two directions substantially perpendicular to each other. The width direction of the bezel area (BA) is substantially the same as the length direction of the display unit 151, and the length direction of the bezel area (BA) may correspond to a direction corresponding to a corner of the display unit 151.

Referring to FIG. 8C, the controller 180 controls the display unit 151 to select another date to correspond to a consecutive touch input applied to the bezel area (BA) from a currently highlighted date, and display the selected another date with a highlight attribute.

The display unit 151 and the bezel area (BA) receive all touch inputs applied in both directions, and the controller 180 controls a change of the content according to the direction of the touch input. In other words, when a touch input is applied in an opposite direction along the width direction of the bezel area (BA), the controller 180 may control the display unit 151 to display a calendar for the next year.

Accordingly, the user may apply a touch input to the bezel area (BA) without the need of configuring the screen information and touching a graphic image on the display unit 151 for changing information corresponding to each content, thereby changing the information of content in a more precise manner without hiding screen information on the display unit 151.

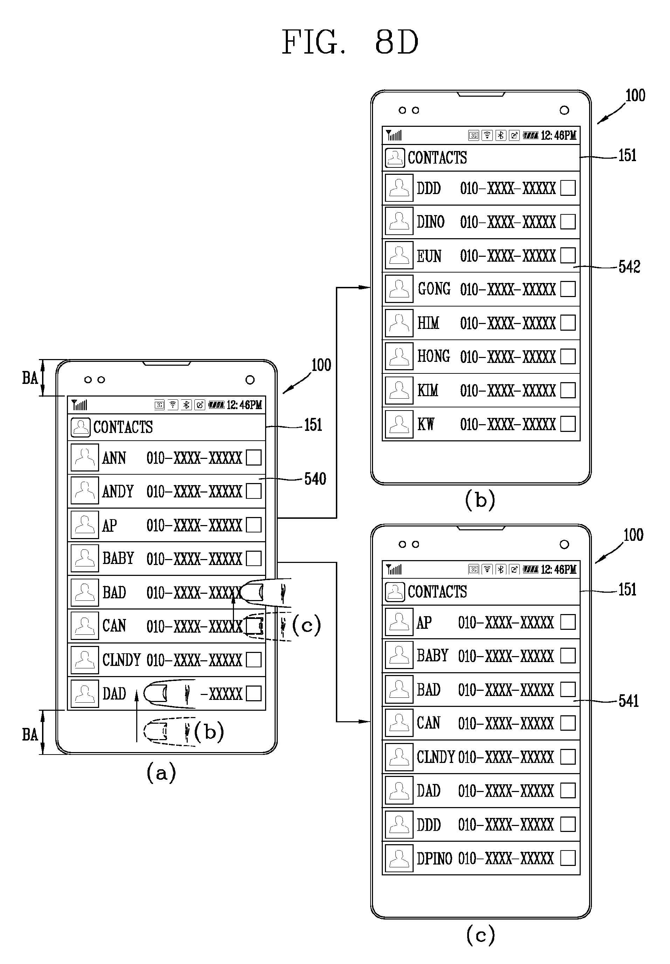

A control method of switching screen information contained in one data will be described with reference to FIG. 8D. There is a case where the data is not displayed at a time on the display unit 151 according to the size of the display unit 151. In this case, the display unit 151 displays part of the data as screen information 540.

Referring to FIGS. 8D(a) and 8D(c), the controller 180 displays changed screen information 541 containing another part of the data according to a consecutive touch input applied to the display unit 151. In order to change the screen information, the user applies a consecutive touch input to the display unit 151, and the controller 180 generates a first control command based on the touch input. The controller 180 changes the screen information based on a touch range of the consecutive touch input. In other words, the screen information 540 may be contained in the changed screen information 541 according to the touch range.

On the other hand, the controller 180 generates a second control command for controlling screen information 540 according to a consecutive touch input applied to the bezel area (BA). The controller 180 divides the data into pages that can be displayed at a time. In other words, screen information 540 displayed on the display unit 151 corresponds to one page. The controller 180 controls the display unit 151 to switch the current page to the previous or next page when a consecutive touch input is applied to the bezel area (BA) along one direction. The previous or next page corresponds to changed screen information displayed on the display unit 151.

In other words, the first control command is formed to sequentially display data according to the touch range, and the second control command is formed to change a defined page so as to display data on the display unit 151 at a time.

In the drawing, one direction of a touch input applied to the bezel area (BA) to switch the page is illustrated as the width direction of the bezel area (BA), but it may not be necessarily limited to this.

According to the present embodiment, the controller 180 may switch the screen information of data displayed on the display unit 151 in a faster manner, thereby receiving an enormous amount of information in a more convenient manner.

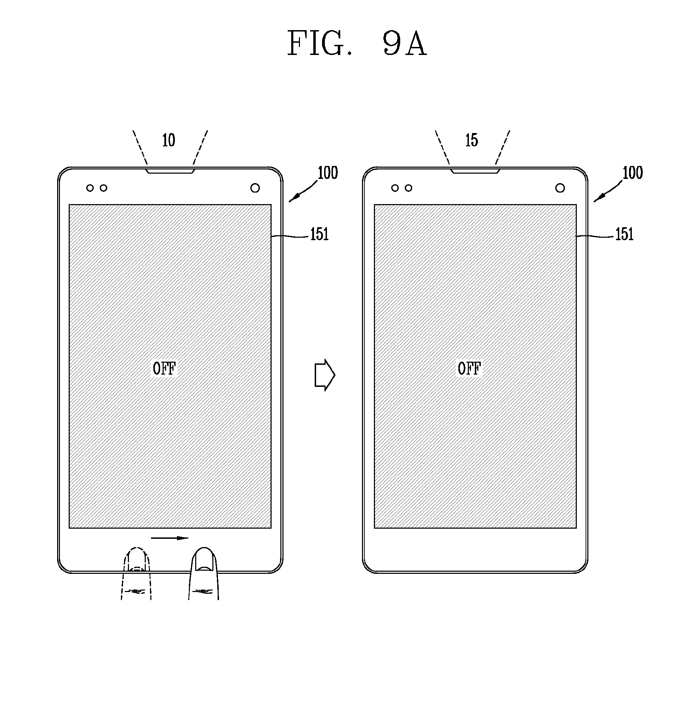

FIGS. 9A through 9J are conceptual views for explaining a method of controlling each function of the mobile terminal by a consecutive touch input applied to the bezel area (BA) according to various embodiments.

A control method of adjusting volume when the display unit 151 is in an inactive state will be described with reference to FIG. 9A. Here, the inactive state of the display unit 151 denotes a state in which any screen information is not displayed on the display panel, and in this case, a touch input applied to the display unit 151 is blocked.

Even when the display unit 151 is in an inactive state, the audio output module 153 may output a sound at a volume set by the user.

When a consecutive touch input is applied to the bezel area (BA), the controller 180 controls the audio output module. For example, when a consecutive touch input applied to the bezel area (BA) is moved in the right direction, the controller 180 controls the audio output module 153 to increase the volume so as to correspond to the touch range.

Accordingly, when the display unit 151 is in an inactive state, the user may adjust volume in a more convenient manner without activating the display unit 151 or pressing the second manipulation unit 132. Accordingly, it may be possible to reduce power consumed for the activation of the display unit 151.

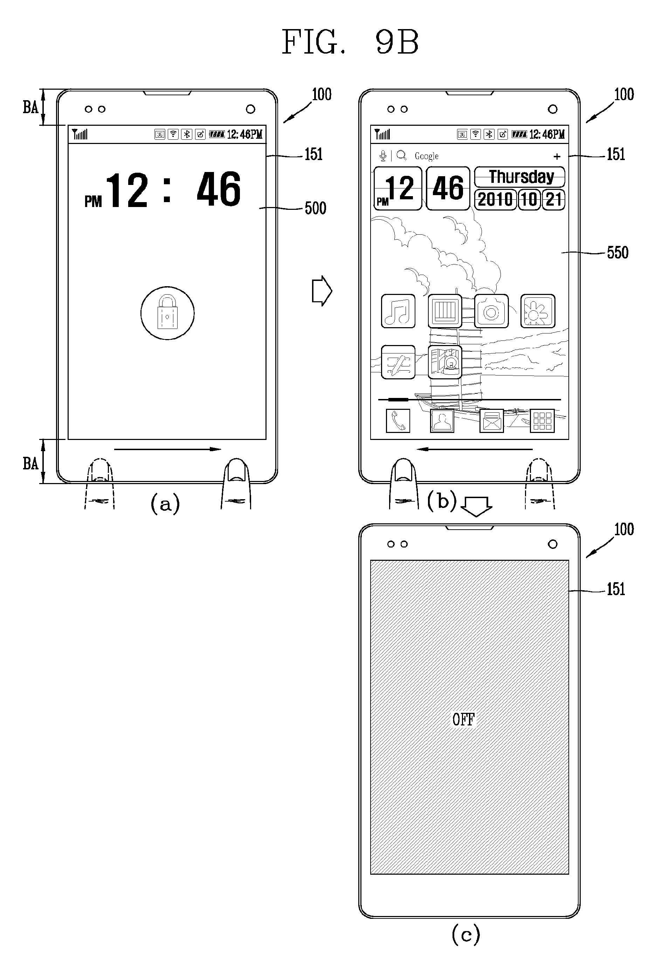

A control method of changing the mode of the display unit 151 based on a touch input applied to the bezel area (BA) will be described with reference to FIG. 9B.

FIG. 9B(a) is a view illustrating the display unit 151 that displays a lock screen 500 when the mobile terminal is in a lock mode. In the lock mode, the controller 180 restricts part of a touch input applied to the display unit 151. For example, the display unit 151 receives only a touch input for releasing the lock mode.

The controller 180 releases the lock mode based on a consecutive touch input applied to the bezel area (BA) in the lock mode. When a consecutive touch input is applied to the bezel area (BA) along one direction, the controller 180 switches the lock screen 500 to a home screen page 550.

Here, the home screen page 550 may include at least one icon for executing an application. When the home screen page 550 is displayed, the display unit 151 receives a user's touch input.

Referring to FIGS. 9B(b) and 9B(c), the controller 180 may switch the display unit 151 to an inactive state by a consecutive touch input applied to the bezel area (BA) while the home screen page 550 is displayed.

Here, a consecutive touch input applied to the bezel area (BA) may be set to a direction opposite to that of a touch input for releasing the lock mode, but it may not be necessarily limited to this. For example, the controller 180 may release the lock mode based on a touch input applied to the bezel area (BA) in a predetermined direction, and switch the display unit 151 to an inactive state again. Furthermore, though not shown in the drawing, the controller 180 may switch the home screen page 550 to the lock screen 500 again.

Accordingly, the user can release the lock mode in a more convenient manner, and switch the display unit 151 to an inactive state, thereby reducing power consumed by the activation of the display unit 151.

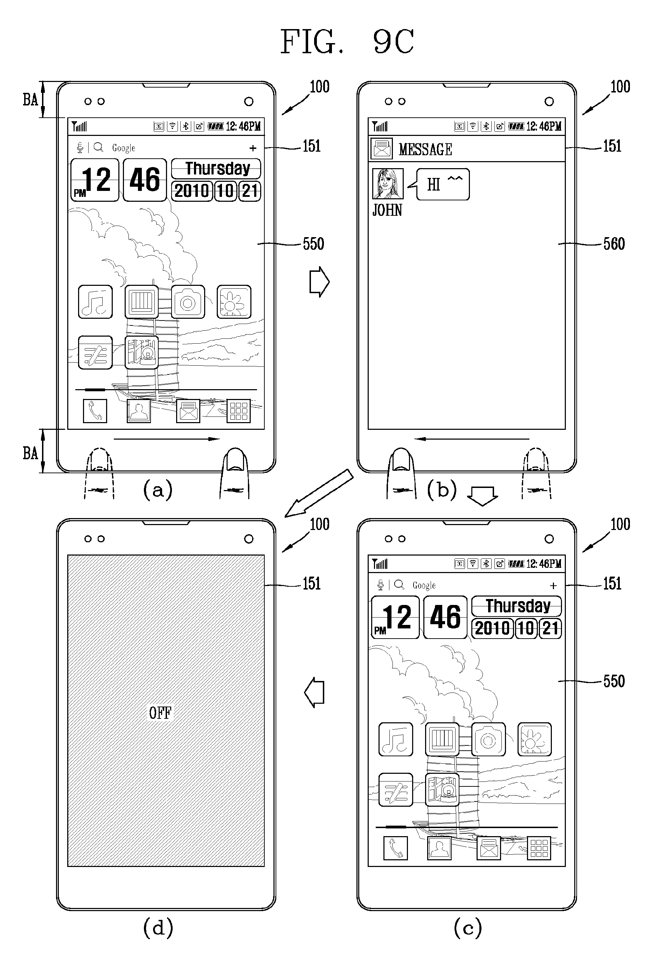

A control method of immediately executing an application by a consecutive touch input applied to the bezel area (BA) will be described with reference to FIG. 9C.

The controller 180 may activate a predetermined application based on a consecutive touch input applied to the bezel area (BA).

For example, the user may set up an application corresponding to a touch input on the bezel area (BA). Furthermore, the controller 180 may specify an application corresponding to a touch input on the bezel area (BA) in real time based on the status of the mobile terminal. For example, upon receiving an event corresponding to a specific application or when an event occurs, the controller 180 may execute an application corresponding to the event when receiving a touch input on the bezel area (BA).

Furthermore, the controller 180 may execute one of applications corresponding to an icon contained in the home screen page 550. The executed application may be based on a user's use frequency.

When a consecutive touch input is received at the bezel area (BA) in a state that the execution screen 560 of the application is displayed, the controller 180 may terminate the execution of the application. Here, a consecutive touch input on the bezel area (BA) may be set to a direction opposite to that of a touch input for executing the application, but it may not be necessarily limited to this. For example, the application may be terminated based on a touch input applied in a substantially same direction or terminated based on a consecutive touch input applied along a substantially perpendicular direction.

Referring to FIGS. 9C(b) and 9C(c), when the application is terminated, the controller 180 controls the display unit 151 to switch the execution screen 560 to the home screen page 550.

On the other hand, referring to FIGS. 9C(b), and 9C(d), the controller 180 may terminate the application, and deactivate the display unit 151.

According to the present embodiment, the user may apply a touch input to the bezel area (BA) to execute and terminate the set application in a faster manner, thereby receiving his or her desired information in a convenient manner.

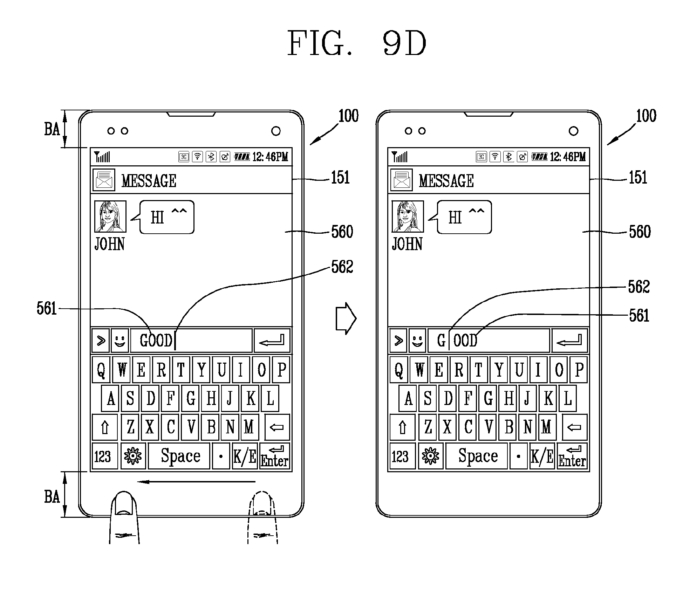

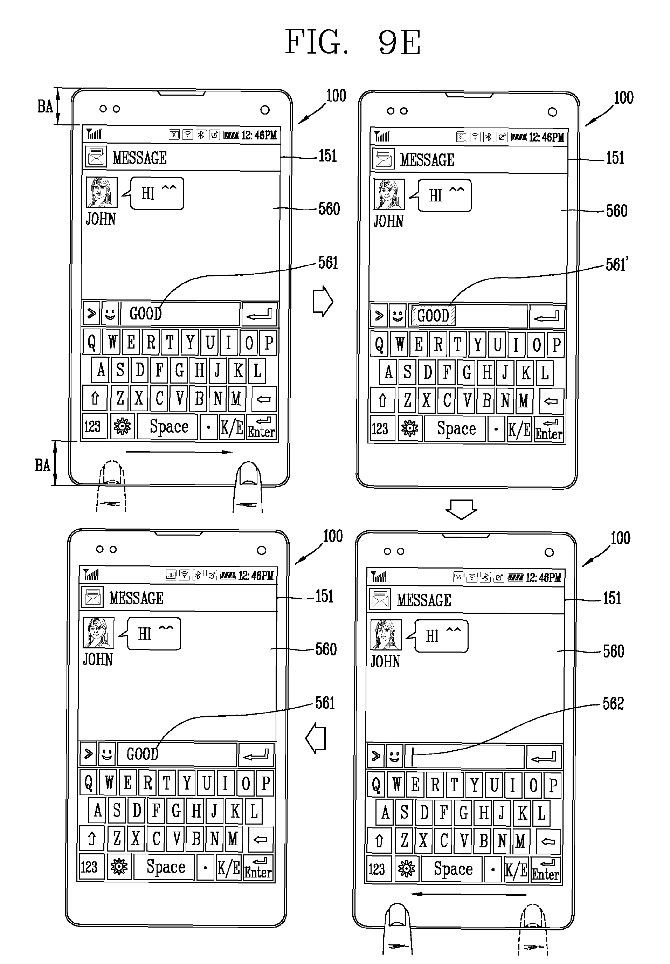

A control method of editing text using a touch input on the bezel area (BA) will be described with reference to FIGS. 9D and 9E.

The display unit 151 displays screen information 560 including a virtual keyboard for receiving a user's touch input to enter text 561 and a display screen for displaying the entered text 561. For example, the screen information 560 may correspond to an execution screen of a message application.

The text 561 and a cursor 562 indicating a position to be displayed with text by the additional input are displayed on the display window. Here, a cursor is formed at a position adjacent to text, and text is displayed next to the cursor when a user enters additional text. The user may move the cursor position to change the input position of additional text.

When the screen information 560 including the cursor and the virtual keyboard is displayed on the display unit 151, the controller 180 controls the display unit 151 to move and display the position of the cursor based on a consecutive touch input applied to the bezel area (BA).

The cursor may be displayed between the displayed texts, and the direction of the cursor relatively moved with respect to the text is substantially the same as that of a consecutive touch input applied to the bezel area (BA).

Referring to FIG. 9D, a cursor positioned at the right end of the text is relatively moved to the left region according to the direction of a touch input being moved from the right to the left side of the bezel area (BA). Furthermore, a position change of the cursor corresponds to a touch range of the touch input.

Though not shown in the drawing, when the length of text displayed on the input window is long, the controller 180 may continuously move the position of the cursor based on a plurality of touch inputs applied along one direction of the bezel area (BA).

Referring to FIG. 9E, the controller 180 may select part of the text 561 based on a touch input applied to the bezel area (BA) along one direction. The controller 180 controls the display unit 151 to process the selected text in a block 561'. The controller 180 selects part of the text 561 along the direction of the touch input from the position of a cursor on the text 561 regardless of an initial position applied to the bezel area (BA).

When a touch input initially applied to the bezel area (BA) is sensed as a long touch input, the controller 180 may control part of the text 561 to be selected by a touch input consecutively applied along the bezel area (BA). On the other hand, as illustrated in FIG. 9D, when a user's hand is immediately moved and sensed as a consecutive touch input, the controller 180 controls the display unit 151 to move the cursor.

On the other hand, when a touch input applied to the bezel area (BA) is released to select the text, the controller 180 may control the display unit 151 to delete the text.

Furthermore, when text is deleted based on a touch input applied to the bezel area (BA), the controller 180 may restore it upon receiving a consecutive touch input applied along an opposite direction on the bezel area (BA). In other words, the controller 180 controls the display unit 151 to display the deleted text again on the output unit based on a consecutive touch input in the opposite direction.

According to the present embodiment, the controller 180 may move a cursor without hiding the display unit 151 on text with a relatively small size and narrow space, and select and delete text in a convenient manner. Furthermore, it may be possible to restore the executed function again using the bezel area (BA), thereby more simply editing text.

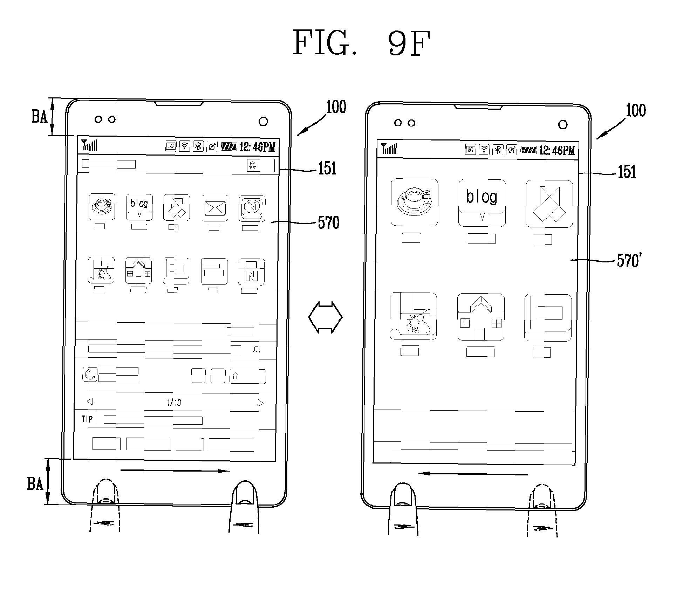

A control method of enlarging screen information based on a touch input applied to the bezel area (BA) will be described with reference to FIG. 9F. The controller 180 controls the display unit 151 to enlarge and display the screen information 570 based on a consecutive touch input applied in one direction along the bezel area (BA).

The display unit 151 displays one region of the enlarged screen information 570' by the touch input. The controller 180 enlarges the screen around a predetermined region of the screen information 570. The controller 180 displays the enlarged screen information 570', and displays the remaining region of the enlarged screen information 570' based on a touch input applied to the display unit 151. For example, the controller 180 may control the display unit 151 to display the enlarged screen information 570' with respect to an upper left corner of the display unit 151.

Furthermore, the controller 180 may control the display unit 151 to reduce and display the enlarged screen information 570' again based on a consecutive touch input applied in a direction opposite to said one direction along the bezel area (BA).

Even when the touch input applied to the bezel area (BA) is released, the controller 180 may control the display unit 151 to continuously display the enlarged screen information 570'. However, it may not be necessarily limited to this.

According to another embodiment, the controller 180 may control the display unit 151 to switch the enlarged screen information 579' to the screen information 570 again when the touch input is released. In this case, the user should continuously apply a touch input to the bezel area (BA) to continuously receive the enlarged screen information 570'.

Otherwise, if a touch input is applied to the bezel area (BA) for a predetermined period of time when the enlarged screen information 570' is displayed (for example, a long touch input is applied to one region subsequent to a consecutive touch input), then the controller 180 may control the display unit 151 to continuously display the enlarged screen information 570' even when the touch input is released.

Furthermore, the controller 180 may control the display unit 151 to display screen information enlarged to correspond to a touch range of the consecutive touch input.

Though not shown in the drawing, the controller 180 may display one region of the screen information in an enlarged manner by a pinch-in or pinch-out type touch input applied to the display unit 151.

According to the present embodiment, the user may receive screen information in an enlarged or reduced manner in a state that the display unit 151 is not hidden by his or her hand.

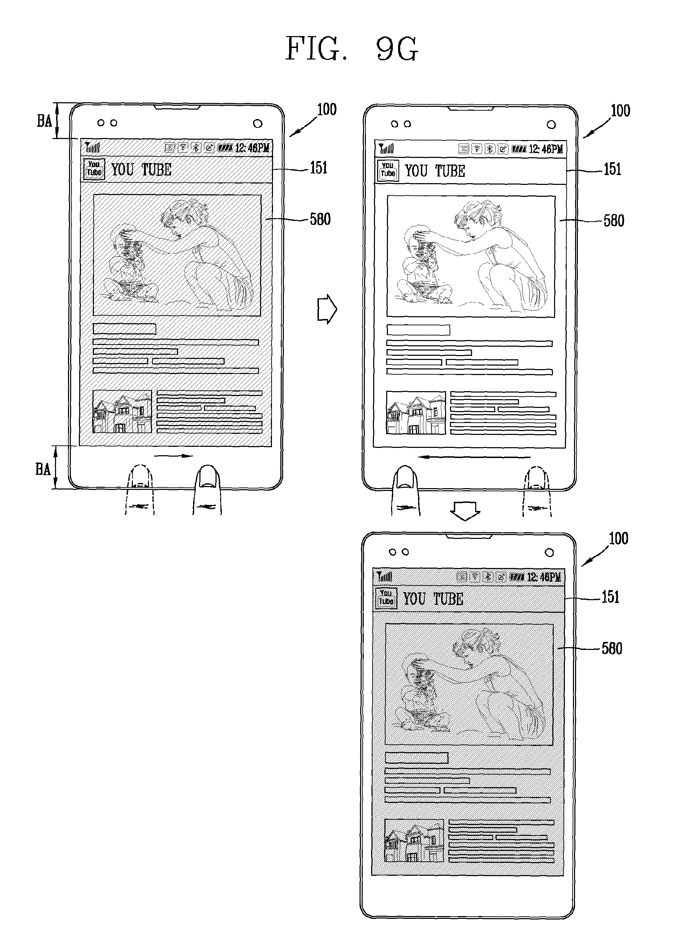

A control method of controlling the brightness of the display unit 151 based on a touch input applied to the bezel area (BA) will be described with reference to FIG. 9G.

The controller 180 controls the display unit 151 to display the brightness adjusted screen information based on a touch input applied to the bezel area (BA) while the screen information 580 with a first brightness is displayed on the display unit 151.

The controller 180 controls the display unit 151 to adjust the brightness in a bright or dark manner based on a touch range of the consecutive touch input or the direction of a touch input applied to the bezel area (BA).

For example, the controller 180 may adjust the brightness of the display unit 151 in a bright manner based on a touch input applied along the right direction of the bezel area (BA), and adjust the brightness of the display unit 151 in a dark manner based on a touch input applied along the left direction thereof.

Furthermore, the controller 180 determines a brightness difference for the adjusted amount based on a change from an initial coordinate to which a touch input is applied to the bezel area (BA) to a coordinate from which the touch input is released.

Accordingly, the user may adjust the brightness of the display unit 151 in a convenient manner without a touch input that finds a graphic image for adjusting the brightness and hides the display unit 151 with his or her hand.

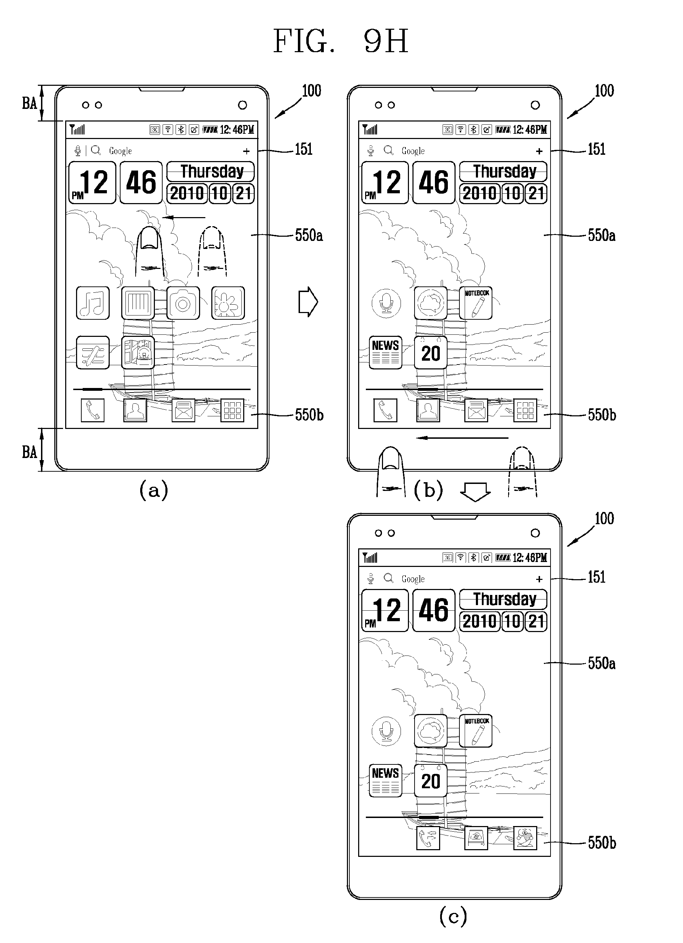

A control method of switching part of content contained in screen information based on a consecutive touch input applied to the bezel area (BA) will be described with reference to FIG. 9H.

FIG. 9H(a) is a view illustrating the display unit 151 on which a home screen page containing a plurality of icons receiving a touch input is displayed to execute an application. The home screen page is divided into a first region 550a and a second region 550b. Both the first and the second region 550a, 550b may include at least one icon. For example, the user may dispose a frequently used icon in the second region 550b.

The controller 180 may switch the screen information of the first and the second region 550a, 550b, respectively, based on a region of the display unit 151 to which a touch input is applied. Referring to FIGS. 9H(a) and 9H(b), when a consecutive touch input is applied to the first region 550a along one direction, the controller 180 controls the display unit 151 to switch the screen information of the firsts region 550a. However, the controller 180 controls the display unit 151 not to switch the screen information of the second region 550b.

On the other hand, though not shown in the drawing, when a consecutive touch input is applied to the second region 550b, the controller 180 controls the display unit 151 to switch the screen information of the second region.

Referring to FIGS. 9H(b) and 9H(c), the controller 180 controls the display unit 151 to switch the screen information of the second region based on a touch input applied to the bezel area (BA). In this case, the controller 180 blocks the switching of the screen information of the first region.

According to the present embodiment, the controller 180 may more easily switch the screen information of the second region corresponding to a relatively narrow region based on a touch input of the bezel area (BA).

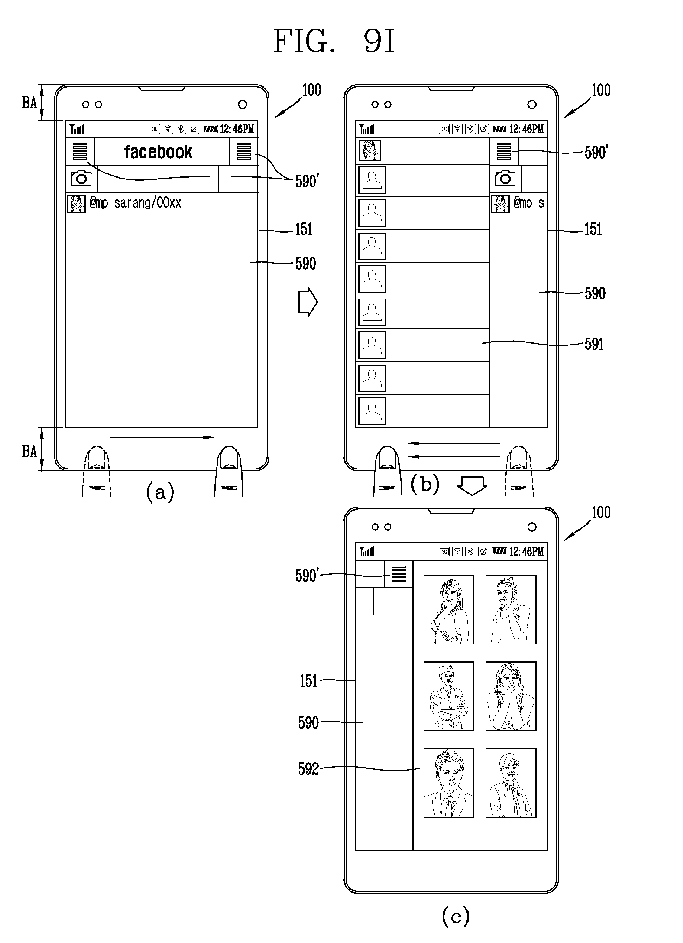

A control method of switching screen information contained in an application based on a touch input applied to the bezel area (BA) will be described with reference to FIG. 9I. FIG. 9(a) is a view illustrating screen information 590 contained in an application. The screen information 590 may include at least one graphic image 590' for displaying additional content. The controller 180 controls the display unit 151 to display first and second additional content 591, 592 on the display unit 151 based on a touch input applied to the graphic image 590'. For example, the controller 180 controls the display unit 151 to display the first and second additional content 591, 592 and part of the screen information 590 at the same time on the display unit 151 based on a touch input applied to the graphic image 590'. Accordingly, the display unit 151 displays the graphic image 590' while displaying the first and second additional content 591, 592. The user may apply a touch input again to the graphic image 590' to control the display unit 151 so as to restrict the output of the additional content. The additional content may be displayed in the right or left region on the display unit 151.

On the other hand, the controller 180 may control the display unit 151 to display the additional content by a consecutive touch input applied to the bezel area (BA) without applying a touch input to the graphic image.

For example, when the consecutive touch input is applied to the bezel area (BA) along the right direction, the controller 180 may control to display the first additional content 591 at a left edge of the display unit 151 and display part of the screen information 590 at a right edge of the display unit 151.

Though not shown in detail in the drawing, the controller 180 may control the display unit 151 to restrict the output of the first additional content 591 and display the screen information 590 based on a consecutive touch input applied in the right direction.

Furthermore, referring to FIGS. 9I(b) and 9I(c), the controller 180 may control the display unit 151 to display the second additional content 592 based on a plurality of touch inputs applied to the bezel area (BA). The touch input has a direction substantially opposite to the input direction of a touch input applied to the bezel area (BA) to display the first additional content 591. The second additional content 592 may be displayed in the right region of the display unit 151.

In other words, when screen information and content contained in an application are displayed based on a touch input applied to the graphic image, the controller 180 may display additional content based on a consecutive touch input applied to the bezel area (BA). The controller 180 may change a position at which the additional content is displayed according to the direction of a touch input applied to the bezel area (BA).

The user may apply a touch input to the bezel area (BA) to display content in the right or left region of the screen information without finding a graphic image displayed on the display unit 151 to apply a touch input.

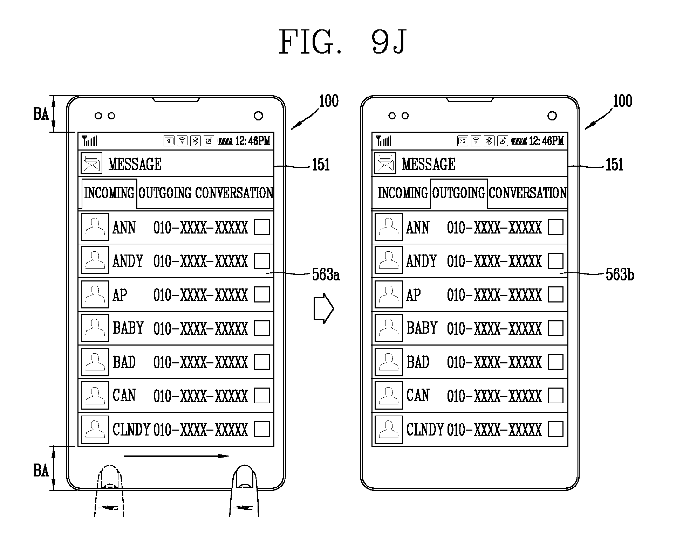

A control method of selecting any one of a plurality of groups containing a plurality of data will be described with reference to FIG. 9J. FIG. 9J is a view illustrating the display unit 151 for displaying the execution screen of an message application.

The display unit 151 display any one screen information of data classified as a plurality of taps on the execution screen of the application. For example, data contained in the message application may be classified into incoming message data received from an external terminal, outgoing message data sent to an external terminal, and conversation data stored with messages sent and received to and from an external terminal.

The display unit 151 forms the plurality of classified message data as respectively classified taps. Though not shown in the drawing, the controller 180 may control the display unit 151 to display any one of a plurality of data classified by applying a touch input to one region on the display unit 151 configured with the title (incoming, outgoing, conversation) of the tap.

According to the present embodiment, the controller 180 controls the display unit 151 to select the tap and display data based on a consecutive touch input applied to the bezel area (BA). For example, the display unit 151 displays incoming message data 563a corresponding to the incoming tap. The controller 180 selects the outgoing tap based on a consecutive touch input applied to the bezel area (BA). The controller 180 controls the display unit 151 to display the outgoing message data 563b from the incoming message data 563a.

The controller 180 may control the display unit 151 to change the incoming tap to the outgoing tap or change the incoming tap to the conversation tap based on the touch range, but it may not be necessarily limited to this.

For example, the controller 180 may control one consecutive touch input applied to the bezel area (BA) to make a tap change once regardless of a touch range on the bezel area (BA).

Accordingly, the user can display data classified as different groups by a touch input applied to the bezel area (BA) without the need of applying a touch input to the display unit 151.

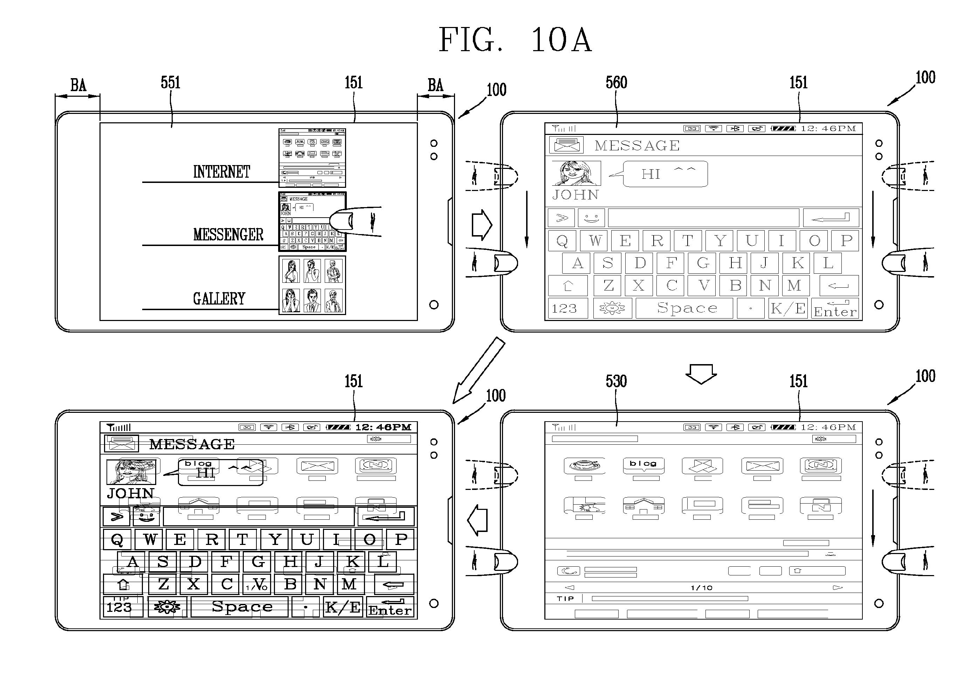

FIGS. 10A through 10E are conceptual views for explaining a control method of a mobile terminal based on a consecutive touch input applied both bezel areas (BAs).

A control method of activating an application being executed will be described with reference to FIG. 10A. The controller 180 controls the display unit 151 to execute a first application based on a touch input applied to screen information 551 containing a thumbnail view of a currently executed application and display the first execution screen 560.

The controller 180 controls the display unit 151 to switch the first execution screen to the second execution screen of the second application being executed based on a touch input applied to the bezel area (BA).

According to the present embodiment, the bezel area (BA) may be divided into a first and a second region. The first and the second bezel area (BA1, BA2) are formed by providing the display unit 151 therebetween. The first bezel area (BA1) is formed adjacent to a lower end portion of the display unit 151, and the second bezel area (BA2) is formed adjacent to an upper end portion of the display unit 151. When the mobile terminal is horizontally disposed with respect to the ground, the user may apply a touch input to the first and the second bezel area (BA1, BA2) at the same time with his or her both hands.

For example, the controller 180 may control the display unit 151 to display the second execution screen 570 based on a consecutive touch input applied to the first and the second bezel area (BA1, BA2) at the same time and moved in a substantially same direction.

Though not shown in the drawing, the controller 180 may control the display unit 151 to switch the second execution screen 570 to the first execution screen 560 based on a consecutive touch input applied to the first and the second bezel area (BA1, BA2) at the same time and moved in a substantially same direction.

The sequence of activating applications and displaying the execution screen in said one direction may depend on the sequence of thumbnail views of applications arranged on the screen information 551.

On the other hand, the controller 180 may control the display unit 151 to display the second execution screen 570 on the first execution screen 560 in an overlapping manner based on a touch input applied to the first and the second bezel area (BA1, BA2) in a state that the first execution screen 560 is displayed.

The display unit 151 may display either one of the first and the second execution screen 560, 570 in a semi-transparent manner to provide a plurality of execution screens at the same time.

Furthermore, when a touch input is applied in the opposite direction, the controller 180 may control the display unit 151 to restrict the output of the second execution screen 570.

Furthermore, when a plurality of consecutive touch inputs are applied in said one direction, the controller 180 may control the display unit 151 to display an execution screen configured with the plurality of layers.

Accordingly, the user may check a plurality of applications which are currently being executed or have not been activated based on a touch input applied to the bezel area (BA).

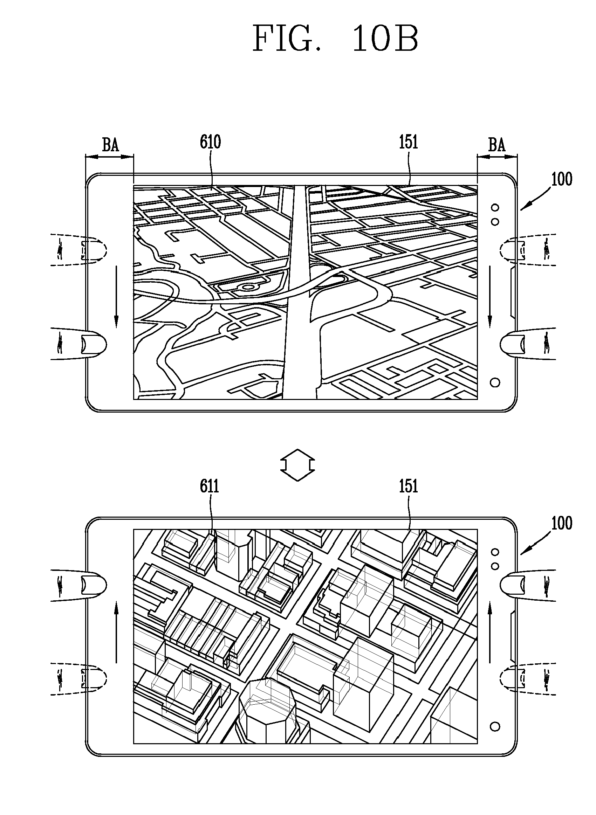

A control method of transforming an image based on a touch input applied to the bezel area (BA) will be described with reference to FIG. 10B. Referring to FIG. 10B, when a two-dimensional map screen information 610 is displayed on the display unit 151, the controller 180 may control the display unit 151 to switch the two-dimensional map screen information 610 to a three-dimensional map screen information 611 based on a touch input applied to the first and the second bezel area (BA1, BA2).

However, the transformable image may not be necessarily limited to map screen information. For example, when a road view image provided using a satellite is displayed, the controller 180 may switch it to a road view from a changed angle of view based on a touch input applied to the first and the second bezel area (BA1, BA2).

According to the present embodiment, a touch input applied to the first and the second bezel area (BA1, BA2) may be preferably continuous in opposite directions to each other. However, it may be also changed by the user's setting, and may not be necessarily limited to this.

Furthermore, when a touch input is applied to the first and the second bezel area (BA1, BA2) in a direction opposite to the previous touch input, the controller 180 may control the display unit 151 to switch it to the two-dimensional map screen information 610.

Accordingly, the user can more easily convert an image through a different directional touch input without using a touch input applied through the rotation of both hands or two fingers or the like on the display unit 151.

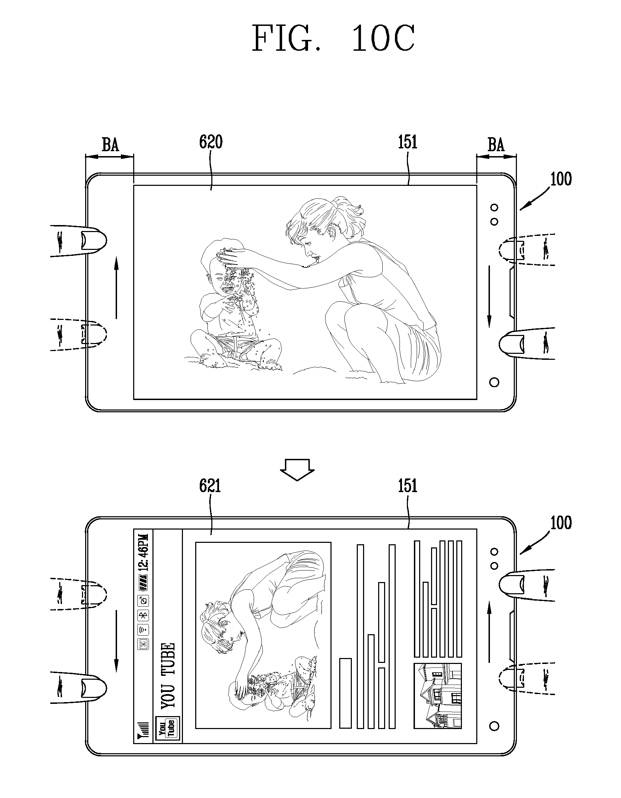

A method of controlling the output direction of screen information based on a touch input applied to the bezel area (BA) will be described with reference to FIG. 10C.

When the mobile terminal is disposed in a horizontal direction with respect to the ground, the controller 180 may control the display unit 151 to sense it, and switch the output direction of the screen information to a horizontal direction.

The controller 180 may control the display unit 151 to display second screen information 621 substantially the same as the first screen information 620 in a vertical direction based on a consecutive touch input applied to the first and the second bezel area (BA1, BA2) while the first screen information 620 is displayed in the horizontal direction.

The first and the second screen information 620, 621 may correspond to the same visual data, but may be displayed in different regions of the visual data, respectively, according to the output direction of the display unit 151.

When the output direction of the screen information is determined by a touch input applied to the bezel area (BA), the controller 180 controls the display unit 151 not to switch it again even when the orientation of the mobile terminal is in a horizontal direction.

Though not shown in the drawing, even when the screen information is displayed in a vertical direction, the controller 180 may display the screen information in a horizontal direction based on a touch input applied to the first and the second bezel area (BA1, BA2).

On the other hand, a consecutive touch input applied to the first and the second bezel area (BA1, BA2) may be preferably formed in opposite directions to each other. However, it may be also changed by the user's setting, and may not be necessarily limited to this.

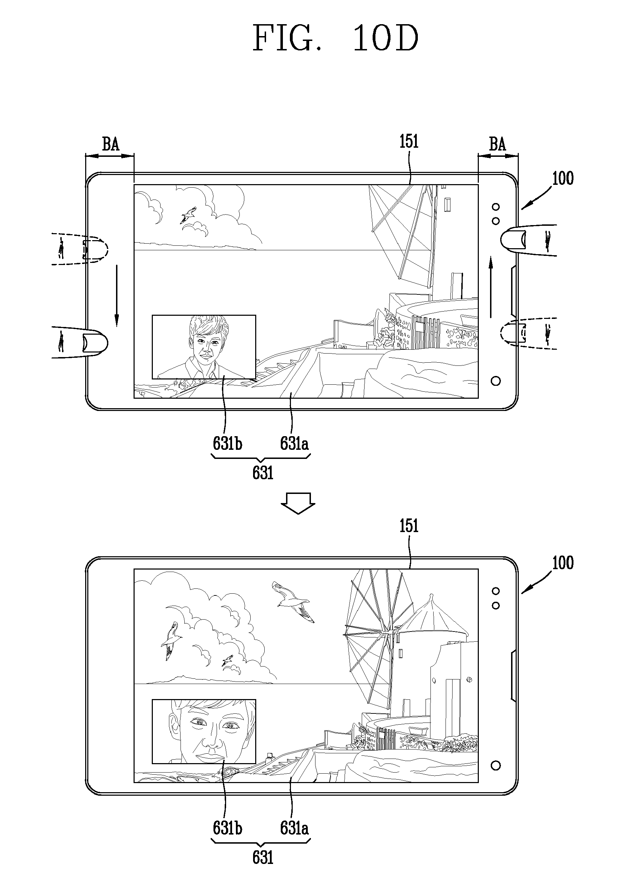

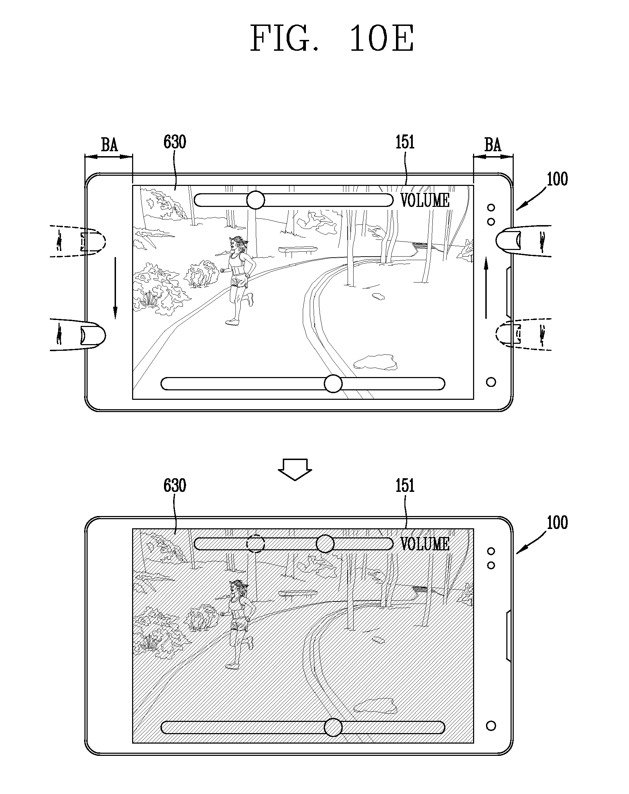

A method of controlling different configurations on a mobile terminal activated at the same time in an independent manner will be described with reference to FIGS. 10D and 10E.

When a front and a rear camera unit 121a, 121b are activated at the same time, the controller 180 controls the front and the rear camera unit 121a, 121b, respectively, using each touch input applied to the first and the second bezel area (BA1, BA2).

The display unit 151 displays a preview image 631 including a front preview image 631b acquired by the front camera unit 121a and a rear preview image 631a acquired by the rear camera unit 121b.

For example, the controller 180 controls to zoom in or out the front camera unit 121a based on a consecutive touch input applied to the first bezel area (BA1). Furthermore, the controller 180 controls to zoom in or out the rear camera unit 121b based on a consecutive touch input applied to the second bezel area (BA2). Accordingly, the front and the rear preview image 631a, 631b are changed.

Furthermore, touch inputs applied to the first and the second bezel area (BA1, BA2) are independent to each other. In other words, when a plurality of constituent elements in the mobile terminal are driven at the same time, the plurality of constituent elements may be respectively controlled at the same time by touch inputs applied to the first and the second bezel area (BA1, BA2).

A method of controlling constituent elements which are not associated with each other in an independent manner based on touch inputs applied to the first and the second bezel area (BA1, BA2) will be described with reference to FIG. 10E.

The display unit 151 displays the playback screen of a video file. The controller 180 adjusts the brightness of the display unit 151 based on a touch input applied to the first bezel area (BA1). Furthermore, the controller 180 controls the audio output module 153 to adjust the volume of the sound based on a touch input applied to the second bezel area (BA2).

In other words, the controller 180 may control the display unit 151 and audio output module 153, namely, visual data and auditory data based on a touch input applied to the first and the second bezel area (BA1, BA2).

Configurations controlled by touch inputs applied to the first and the second bezel area (BA1, BA2) may be set by the user, and controlled respectively even when applied at the same time.

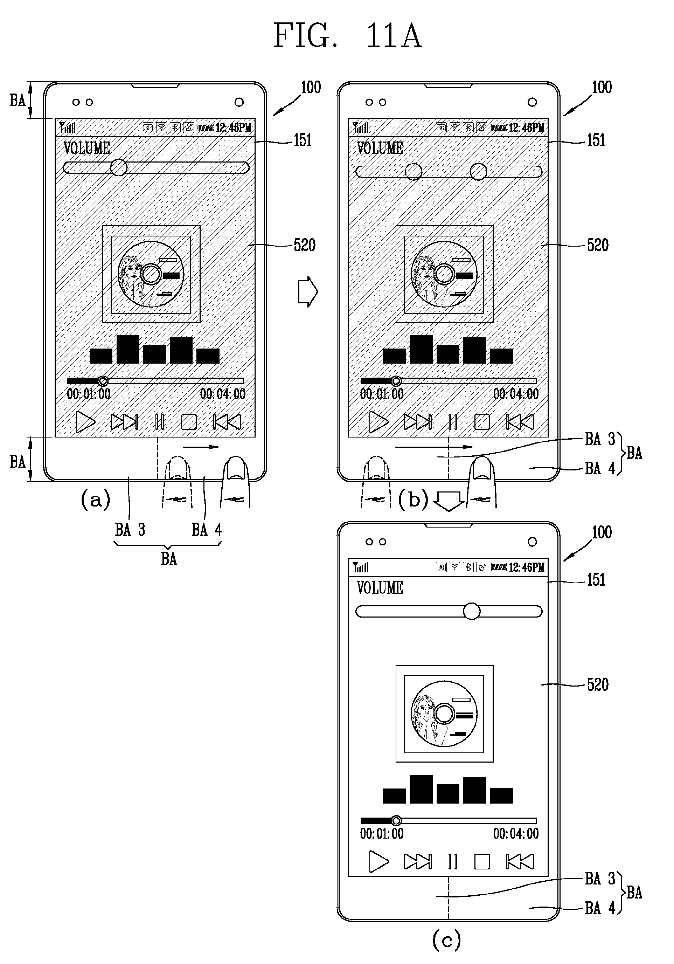

FIGS. 11A through 11D are conceptual views for explaining a control method of different functions according to a touch input method applied to the bezel portion.

A control method of controlling a different function based on a touch input applied to a divided region of the bezel area (BA) will be described with reference to FIG. 11A. A touch region of the bezel portion according to the present embodiment is divided into a first touch area (BA3) and a second touch area (BA4).

Functions corresponding to the first touch area (BA3) and second touch area (BA4) may be set by the user, and a plurality of touch areas may be defined by the user.

For example, while the display unit 151 displays music playback screen information 520, the controller 180 controls the audio output module 153 to change the volume of the sound based on a consecutive touch input applied to the second touch area (BA4).

On the other hand, the brightness of the display unit 151 may be adjusted based on a touch input applied to the first touch area (BA3). The controller 180 determines a control function based on a region to which the initial touch input is applied. Referring to FIG. 11A(b), the touch input is applied from the first touch area (BA3) to the second touch area (BA4), and the controller 180 controls the display unit 151 since a region to which the initial touch input is applied corresponds to the first touch area (BA3).

Accordingly, it may be possible to control more functions using a region of the bezel area (BA).

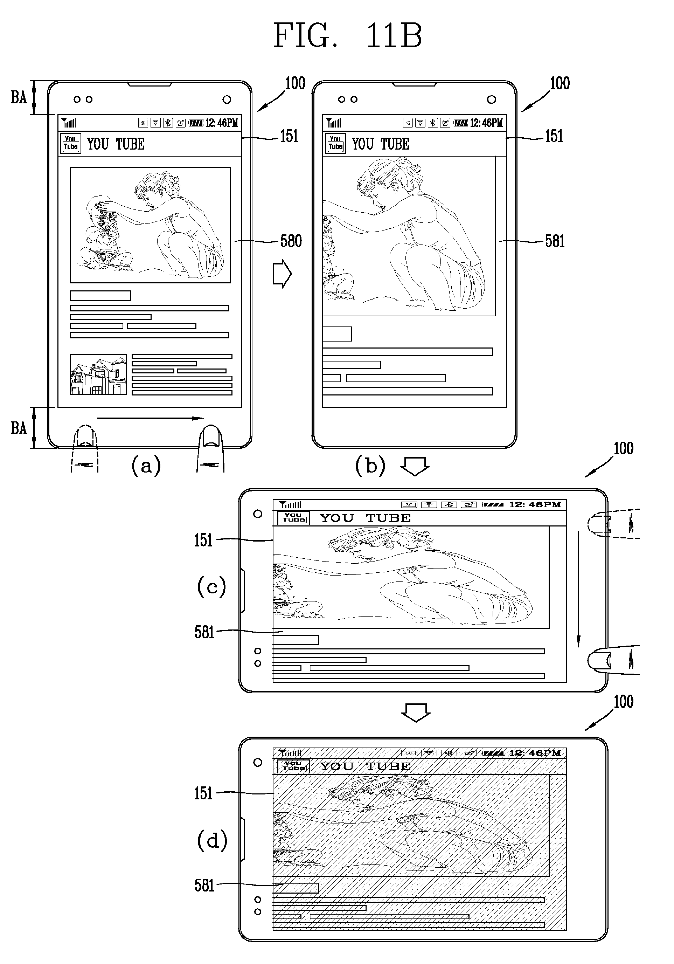

A change of the control method according to a touch input of the bezel area (BA) according to an arrangement change of the mobile terminal will be described with reference to FIG. 11B. Referring to FIGS. 11 B(a) and 11 B(b), while the display unit 151 displays screen information 580 in a vertical direction, the controller 180 controls the display unit 151 to display the enlarged screen information 581 based on a consecutive touch input applied to the bezel area (BA). When a consecutive touch input is applied along the right or left direction of the bezel area (BA), the controller 180 controls the display unit 151 to enlarge or reduce the screen information.

The controller 180 controls the display unit 151 to sense that the mobile terminal is horizontally disposed with respect to the ground, and display the enlarged screen information 580 in a horizontal direction.

The controller 180 controls the display unit 151 to adjust brightness based on a consecutive touch input applied to the bezel area (BA). In other words, the controller 180 may adjust the brightness in a bright or dark manner according to a consecutive touch input applied in the upward or downward direction on the bezel area (BA).

In other words, the controller 180 may sense an arrangement state of the mobile terminal and change a function controlled by a touch input on the bezel area (BA) based on the arrangement state.

According to the present embodiment, a function controlled by a touch input may be changed based on a touch input applied to the same region of the mobile terminal.

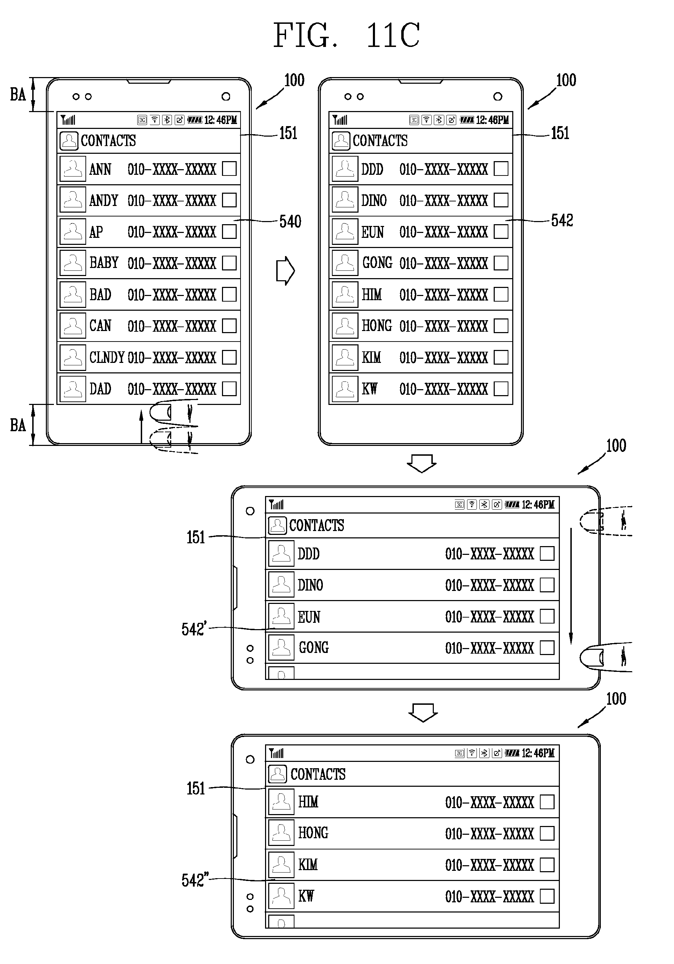

A control method of changing a touch input scheme corresponding to the same function according to an arrangement change of the mobile terminal will be described with reference to FIG. 11C.

Referring to FIGS. 11C and 8D(a), the controller 180 controls the display unit 151 to change a page based on a consecutive touch input applied to the bezel area (BA) in the width direction of the bezel area (BA).

On the other hand, when the mobile terminal is horizontally disposed, the controller 180 controls the display unit 151 to sense it and display the screen information 542 in a horizontal direction. Screen information 542' in a horizontal direction may include only part of data contained in the screen information 542 in a space of the display unit 151.

When the mobile terminal is disposed in a horizontal direction, the controller 180 controls the display unit 151 to display the next page 542" of the screen information 542' in a horizontal direction based on a touch input applied to the bezel area (BA).

However, the input direction of a touch input applied to the bezel area (BA) may correspond to a direction substantially perpendicular to the width direction, namely, a direction from which the bezel area (BA) is extended. In other words, the controller 180 changes the direction of a touch input for displaying the next page of the screen information based on the arrangement direction of the mobile terminal (and the output direction of the screen information).

Accordingly, the user may control screen information in a more intuitive manner according to the arrangement direction of the mobile terminal.

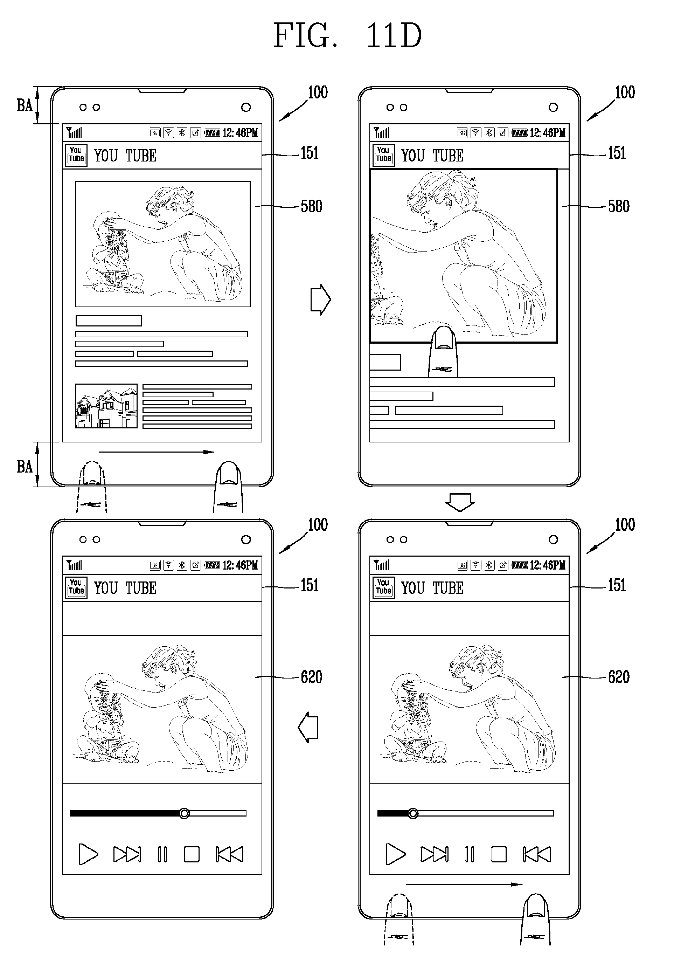

A control method of allowing the same touch input applied to the bezel area (BA) according to the executed application to control a different function will be described with reference to FIG. 11D.

For example, when screen information 580 including the text and media files is displayed by the execution of a first application, the controller 180 controls the display unit 151 to display screen information in an enlarged or reduced manner by a consecutive touch input applied to the bezel area (BA).

On the other hand, when a second application different from the first application is executed, and video playback screen information 620 is displayed, the controller 180 controls the display unit 151 to change the playback section by a consecutive touch input applied to the bezel area (BA).

While executing the first and the second application, touch inputs applied to the bezel area (BA) are substantially the same. However, the controller 180 controls a different function according to which one of the first and the second application is executed (activated).

In other words, the controller 180 may set a function required for the activated application to be controlled by the bezel area (BA). Furthermore, a function corresponding to the each application may be set by the user.

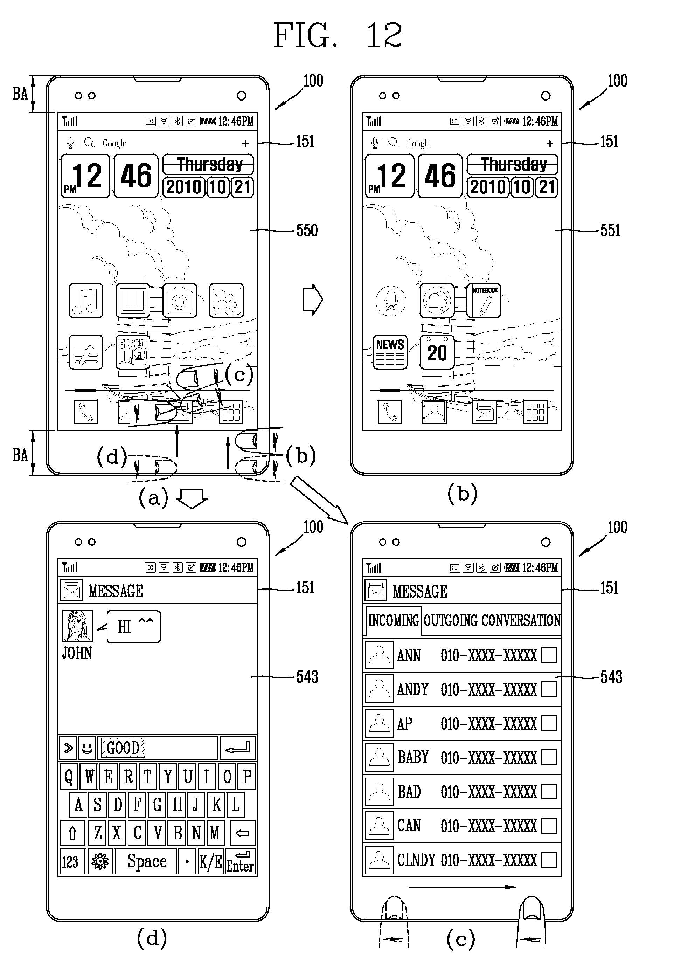

FIG. 12 is a conceptual view for explaining a control method based on a consecutive touch input applied to the display unit 151 and the bezel area (BA).

FIG. 12A is a view illustrating the display unit 151 for displaying a home screen page 550 containing a plurality of icons for executing at least one application. Referring to FIGS. 12A and 12B, the controller 180 controls the display unit 151 to switch it to another home screen page 551 based on a first consecutive touch input applied to the width direction of the bezel area (BA). The touch of the first touch input is terminated or released within the bezel area (BA).

On the other hand, referring to FIGS. 12A and 12C, the controller 180 displays an application corresponding to the icon based on a second touch input applied to an icon displayed on the display unit 151. The controller 180 controls the display unit 151 to switch the home screen page 550 to an execution screen 560 of the application.

Referring to FIGS. 12A and 12D, the controller 180 controls the display unit 151 to display specific screen information 543a of the application based on a third consecutive touch input applied from the bezel area (BA) to an icon on the display unit 151.

A consecutive touch input applied from the bezel area (BA) to an icon on the display unit 151 denotes a consecutive touch input from a first touch input initially applied to the bezel area (BA) to a second touch applied to the display unit 151.

When a second touch applied to the icon is released, the controller 180 displays the predetermined screen information of a specific application corresponding to the icon. The specific screen information 543a is distinguished from the execution screen 560 of the application.

For example, when an event corresponding to the application is received, the controller 180 outputs information on the event to the specific screen information 543a. When a text message is received, the controller 180 controls the display unit 151 to display a recently received text message based on the third touch input.

Otherwise, the controller 180 may control one function of the application to be immediately carried out based on the third touch input. For example, when the third touch input is applied to the icon of a call application, the controller 180 controls the wireless communication unit 110 to send a call to a recently called phone number. Otherwise, when the event of a missed call is received, the controller 180 controls the wireless communication unit 110 to send a call to an external terminal contained in the information of the missed call based on a third touch input applied to the icon.

In other words, the controller 180 controls the function of an application of the icon that has received a touch input to be immediately carried out based on the third touch input.

Though not shown in the drawing, when the second touch of the third touch input is released from a margin of the home screen page 550, the controller 180 may control an application set by the user to be immediately carried out.

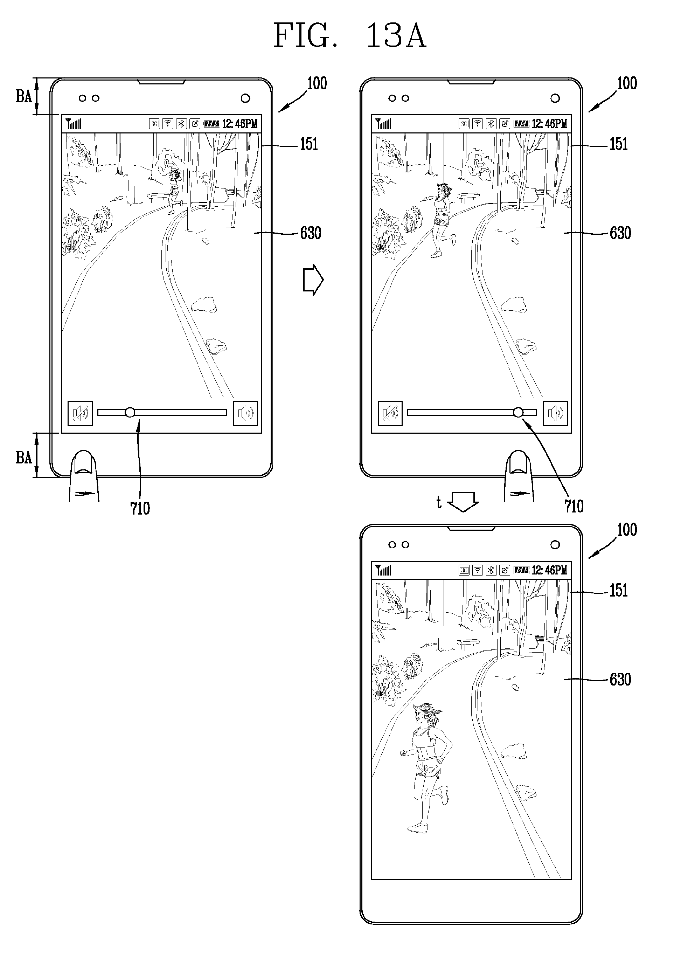

FIGS. 13A through 13D are conceptual views for explaining a control method of displaying a function controlled based on a touch input applied to the bezel area (BA).

Referring to FIG. 13A, a first display area based on a touch input on the bezel area (BA) according to a first embodiment will be described with reference to FIG. 13A. FIG. 13A is a view illustrating the display unit 151 for displaying the playback screen of a video file.

When a touch input is applied to the bezel area (BA), the controller 180 controls the display unit 151 to display the first display area 710. For example, when the audio output module 153 is controlled to adjust the volume of the sound based on a consecutive touch input applied to the bezel area (BA), the first display area 710 may include an image for notifying volume adjustment.

The first display area 710 is displayed in one region on the display unit 151 adjacent to the bezel area (BA) to which the touch input is applied, and the reception of a touch input is restricted from the first display area 710. For example, the first display area may be implemented as an icon denoting volume adjustment and a volume bar indicating a current volume.

Though not shown in the drawing, when a user's touch input is applied to the bezel area (BA) or recognized as a consecutive touch input, the controller 180 controls the display unit 151 to display the first display area. Furthermore, when a touch input applied to the bezel area (BA) is released, the controller 180 controls the display unit 151 to restrict the output of the first display area 710.

Otherwise, the controller 180 may control the display unit 151 to allow the touch input to disappear after a predetermined period of time (t, several seconds) subsequent to the release thereof.

Accordingly, the user may apply a touch input to the bezel area (BA) to directly recognize which function can be controlled.

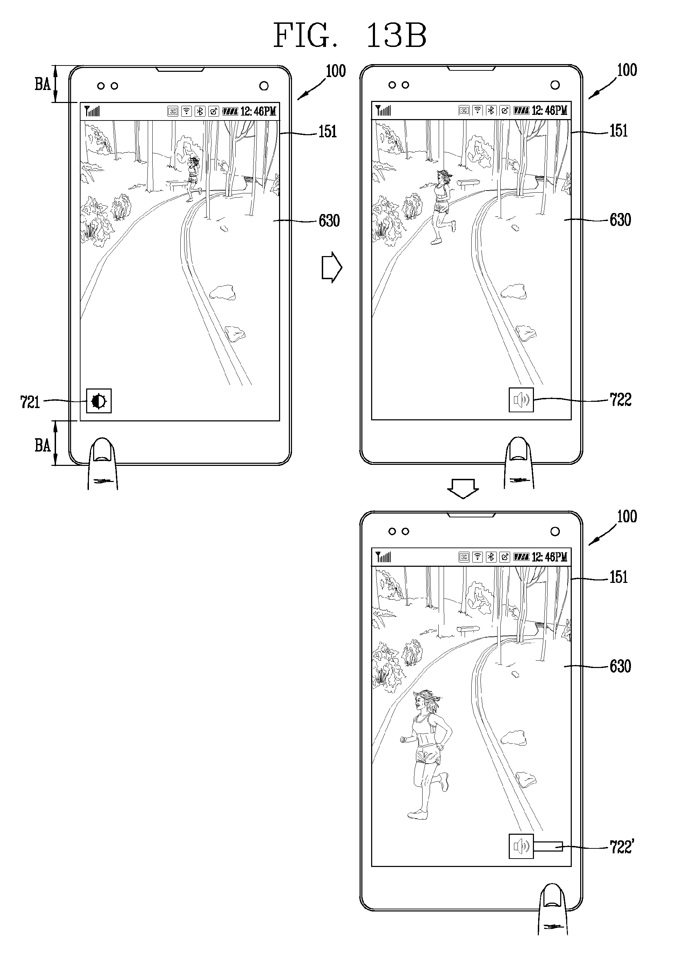

A control method of display a second display area including a different image corresponding to one region of the bezel area (BA) to which the touch input is applied when a different function is carried out by a touch input applied to a different region of the bezel area (BA) will be described with reference to FIG. 13B.

For example, the bezel area (BA) may include a first region receiving a touch input for adjusting brightness and a second region receiving a touch input for adjusting volume. In this case, the controller 180 controls the display unit 151 to output a brightness image 721 which is a receiving area of the touch input for adjusting the brightness of the display unit 151 to the second display area based on a touch input applied to one of the divided regions of the bezel area (BA).

On the other hand, when a touch input is applied to another region of the bezel area (BA), the controller 180 controls the display unit 151 to output a volume image 722 which is a receiving area of the touch input for adjusting volume to the second display area.

The second display area may be preferably displayed in one region of the display unit 151 adjacent to the bezel area (BA) to which the touch input is applied, but it may not be necessarily limited to this. For example, the second display area may be displayed in one region of the bezel area (BA) divided into the region.

On the other hand, when a consecutive touch input is applied in a state that the volume image 722 is displayed, the controller 180 controls the display unit 151 to further display an additional display area 722' indicating the control status.

In other words, when a different function is controlled by a touch input on each divided region of the bezel area (BA), the user may check each function when the touch input is applied thereto.

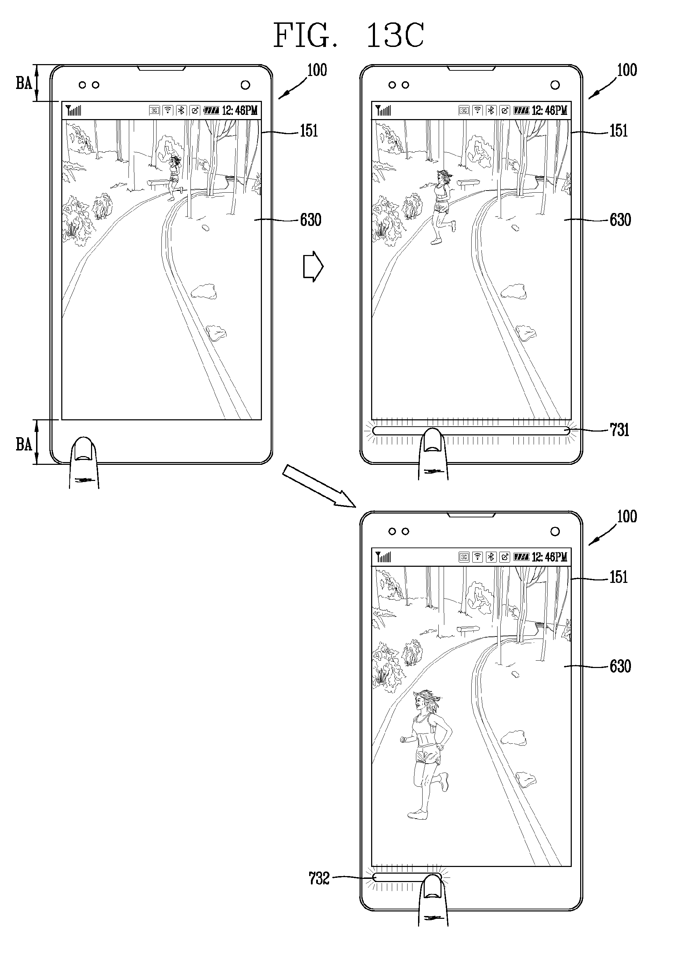

A control method of displaying a third display area on the bezel area (BA) based on the touch input will be described with reference to FIG. 13C. When a touch input is applied (and/or the consecutive touch input is sensed) on the bezel area (BA), a third display area with a light emitting shape is displayed on the bezel area (BA).

For example, the bezel area (BA) may include a transparent area for transmitting light, and a light emitting portion (for example, LED) for emitting light may be mounted within the bezel area (BA). When a touch input is applied to the bezel area (BA), the controller 180 displays a light emitting image 731 formed with a predetermined distance along the extended direction of the bezel area (BA).

Though not shown in the drawing, the emission of light may be restricted from the light emitting image 731 when releasing the touch input. Accordingly, the user may recognize a region for receiving a touch input on the bezel area (BA). For example, as illustrated in FIG. 9H, when a different function is controlled by a touch region of the bezel area (BA), the controller 180 may control the light emitting portion to emit light with a distinct color. On the other hand, when the touch input is sensed in the width direction other than the formation direction of the bezel area (BA), the controller 180 may control a light emitting image to be formed along the width direction.

Accordingly, the controller 180 may guide a touch input for controlling a specific function.

On the other hand, the controller 180 controls the light emitting portion to form the another light emitting image 732 in a region to which the consecutive touch input is applied. The controller 180 controls the light emitting image 732 to be formed from an initial touch input point.

Accordingly, the controller 180 may determine a touch range, and estimate a control range of the function when it is desired to control a function according to the touch range.

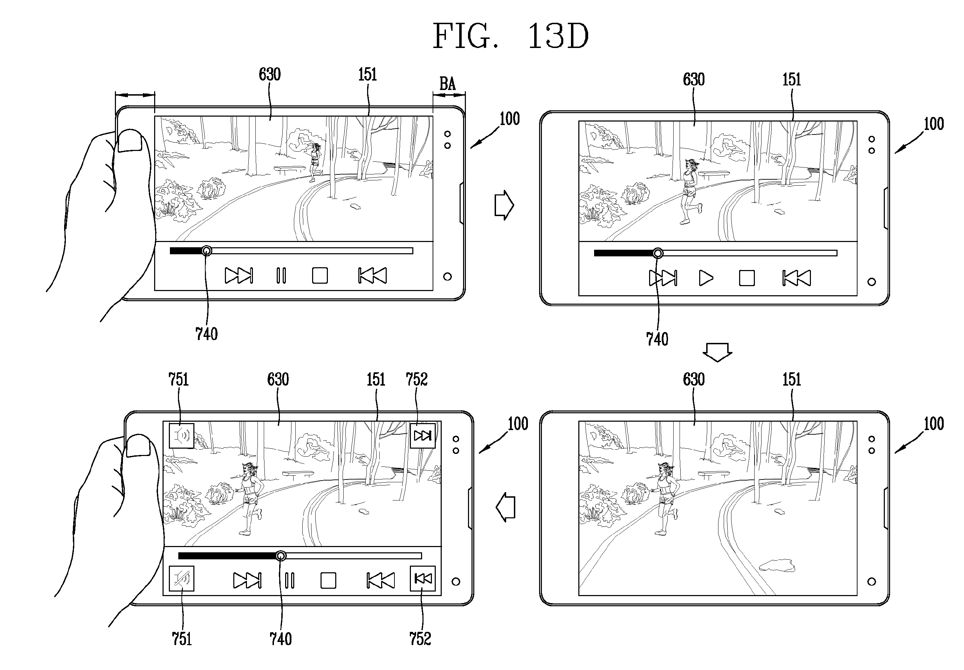

A method of controlling the display unit 151 by a user's hand brought into contact with the bezel area (BA) will be described with reference to FIG. 13D. When a user's hand is sensed on the bezel area (BA), the controller 180 controls the display unit 151 to display the video playback screen 630 and a fourth display area 740.

According to the present embodiment, when a hand touch is applied to a predetermined region of the bezel area (BA) at the same time, the controller 180 senses it to control the mobile terminal. The controller 180 may distinguish between a consecutive touch input due to a moving hand and a touch input applied to a consecutive region at the same time.

When a touch input applied to the bezel area (BA) is released, the controller 180 controls the display unit 151 to suspend the playback of the video. Furthermore, when a predetermined period of time has passed subsequent to releasing the touch input of the hand, the controller 180 controls the display unit 151 to restrict the output of the fourth display area 740.

However, it may not be necessarily limited to this, and the controller 180 may display the fourth display area 740 when releasing the touch input of the hand is released therefrom, and restrict the output of the fourth display area 740 when the touch input of the hand is applied thereto. Furthermore, the controller 180 may control the display unit 151 to suspend the playback of the video when the touch input of the hand is applied thereto, and perform the playback of the video when the touch input of the hand is released therefrom.

Furthermore, when a touch input is applied to the bezel area (BA), the controller 180 may control the display unit 151 to display a fifth display area. For example, the fifth display area may include a volume adjustment image 751 displayed adjacent to one edge of the display unit 151 and a playback section adjustment image 752 displayed in a region facing said one edge.

Accordingly, when the user holds the mobile terminal or puts it down on the ground according to the user's convenience, the controller 180 may sense it to suspend the playback or continue to perform the playback. Furthermore, when the control of a specific function is enabled by a touch input on the bezel area (BA), an image may be additionally displayed in a region adjacent to the bezel area (BA) to notify a convenient control method to the user.

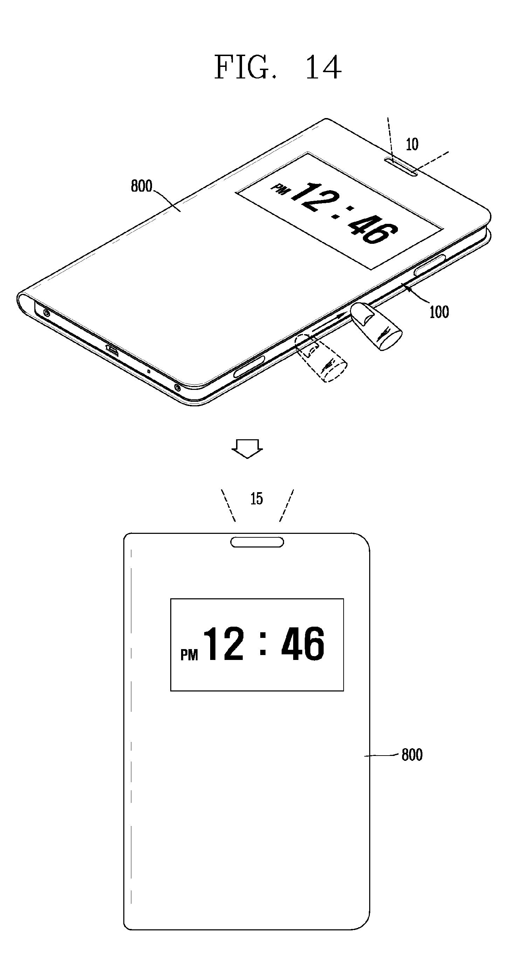

FIG. 14 is a conceptual view for explaining a control method in case where a case is mounted on the mobile terminal. Referring to FIG. 14, a terminal cover 800 may be mounted on an external appearance of the mobile terminal.

A mobile terminal according to the present embodiment senses a consecutive touch input applied to a side bezel portion by a touch sensing unit formed at an inner surface of the lateral surface.

For example, the controller 180 may control the audio output module 153 to adjust the volume of the sound based on a consecutive touch input applied to the side bezel portion in a state that the cover is mounted thereon.

However, a function based on a touch input applied to the lateral surface may not be necessarily limited to this, and a function such as turning off power or receiving a call in a state that the display unit is not seen may be carried out.

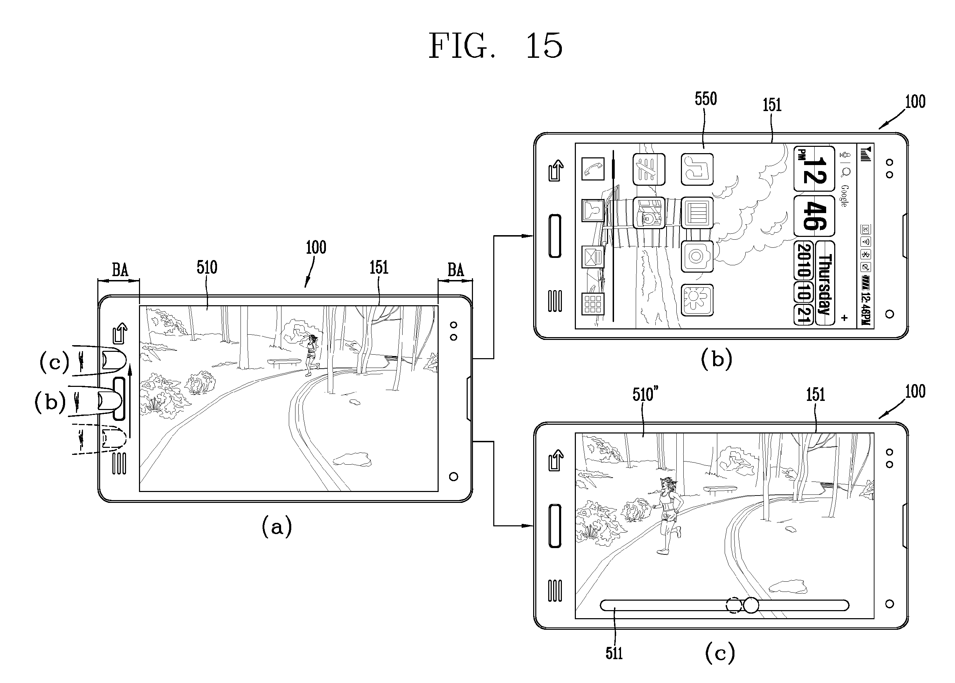

FIG. 15 is a conceptual view for explaining a control method of a mobile terminal containing a manipulation unit. Referring to FIGS. 15A and 15B, the screen information 510 is converted and switched to a home screen page 550 based on a touch input applied to the first manipulation unit 131.

However, the controller 180 controls the display unit 151 to change the video playback section based on a consecutive touch input applied to the bezel area (BA) to pass through the first manipulation unit 131.

In other words, the foregoing control methods according to all embodiments will be also applicable to a bezel portion of the mobile terminal containing the first manipulation unit 131, and the control methods thereof are substantially the same.

The configurations and methods according to the above-described embodiments will not be applicable in a limited way to the foregoing terminal and a terminal mounted with a cover, and all or part of each embodiment may be selectively combined and configured to make various modifications thereto.

## Claims

1. A mobile terminal, comprising:
a touchscreen;
a bezel located adjacent to an outer edge of the touchscreen;
a touch sensor operatively coupled to the bezel and being configured to detect touch input received at the bezel; and
a controller configured to:
cause the touchscreen to display data;
change the displayed data according to a first manner in response to a first touch input received at the touchscreen; and
change the displayed data according to a second manner in response to a second touch input received at the bezel.

2. The mobile terminal of claim 1, wherein
the first touch input is a drag input comprising an input at an initial location of the touchscreen and extending over a distance of the touchscreen without breaking contact with the touchscreen; and
the second touch input is a drag input comprising an input at an initial location of the bezel and extending over a distance of the bezel without breaking contact with the bezel.

3. The mobile terminal of claim 2, wherein the first manner and the second manner are the same function, but represent different magnitudes of the same function.

4. The mobile terminal of claim 2, wherein the first manner and the second manner are different functions, and wherein the distance of the touchscreen of the drag input of the first touch input is about the same as the distance of the bezel portion of the drag input of the second touch input.

5. The mobile terminal of claim 2, wherein the controller is further configured to:
change the displayed data in a first proportion to the distance of the touchscreen of the drag input of the first touch input; and
change the displayed data in a second proportion to the distance of the bezel portion of the drag input of the second touch input,
wherein the distance of the touchscreen of the drag input of the first touch input is about the same as the distance of the bezel portion of the drag input of the second touch input, and
wherein the first proportion is different than the second proportion.

6. The mobile terminal of claim 2, wherein the displayed data comprises a plurality of changeable content, and different content of the plurality of contents are changed based on the first touch input and the second touch input.

7. The mobile terminal of claim 1, wherein the first manner and the second manner are different functions, wherein the controller is further configured to:
change an active mode of the touchscreen to an inactive mode in response to the second touch input.

8. The mobile terminal of claim 1, wherein the displayed data comprises a cursor formed in text and at least one region within the text, and wherein
the controller is further configured to cause the touchscreen to move a location of the cursor, or edit at least part of the text, based on the second touch input.

9. The mobile terminal of claim 1, wherein the bezel comprises a first bezel and a second bezel respectively located adjacent to first and second opposing edges of the touchscreen, and wherein the second touch input is received at either or both of the first and second bezels.

10. The mobile terminal of one of any claims 1 to 9, wherein the bezel comprises a first region that is directly adjacent to a second region of the bezel, and wherein the controller is further configured to:
control a different function based on a touch input received at the first region and the second region.

11. The mobile terminal of claim 10, wherein the controller is further configured to control a function selected based on an initial touch region of the touch input received at the first region and the second region.

12. The mobile terminal of one of any claims 1 to 11, wherein the displayed data comprises an icon for receiving a touch input at an execution screen of an application, and
the controller is further configured to cause the touchscreen to display specific screen information of the application based on a touch input received beginning at the bezel extending to the icon.

13. The mobile terminal of claim 1, further comprising:
a terminal body comprising a front side formed with the touchscreen, a rear side facing away the front side, and a lateral side connecting the front side to the rear side; and
a touch sensing unit comprising a first and a second sensing unit disposed to correspond to the touchscreen and the bezel within the terminal body and being formed to sense a user touch input.

14. The mobile terminal of claim 13, wherein the first and the second sensing unit of the touch sensing unit are formed with independent sensing members.

15. The mobile terminal of claim 14, further comprising:
at least one manipulation unit disposed at the bezel of the body to receive a user touch input to generate a predetermined control command,
wherein a sensing region forming the touch sensing unit is located between the at least one manipulation unit.
